# EUROPEAN PATENT APPLICATION

(11) **EP 4 755 272 A2**
(43) Date of publication of application: **10.06.2026**
(21) Application number: 26168666.1
(22) Date of filing: 04.05.2020
(51) Int. Cl.: A47J 31/52

(54) **SMART BEVERAGE PREPARATION MACHINE AND METHOD**

(30) Priority: 03.05.2019 US 201962842747 P
(62) Divisional of application: 20728309.4
(71) Applicant: Luigi Lavazza S.p.A., 10152 Torino (IT)
(72) Inventor: HYMAN, David, Romansville, 19320 (US); KNOWLES, David, St Albans, AL4 0GY (GB); KLAENER, Dina, Philadelphia, 19130 (US); WILLIAMSON, Bruce, Glen Mills, 19342 (US)
(74) Representative: Archer, Graham John

(57) **Abstract**

A method, apparatus, and/or system may be provided for dispensing a beverage. In an example, a beverage preparation machine may include a container compartment for receiving a beverage packet comprising beverage ingredients. An outlet may be configured to dispense a beverage flavored by the beverage packet. A communication interface may be configured to receive a wireless signal from an electronic device, the wireless signal comprising an identifier of the electronic device. A processor may be operably coupled to the communication interface. The processor may be configured to receive the identifier of the electronic device; associate the identifier of the electronic device with a user and a beverage preference of the user; and cause the beverage dispensed by the outlet to be based on the beverage preference of the user.

## Description

### CROSS-REFERENCE TO RELATED PATENT APPLICATIONS

The present application claims the benefit of priority from U.S. Provisional Application Serial No. 62/842,747, filed May 3, 2019, the contents of which are hereby incorporated herein by reference in its entirety.

### BACKGROUND

Beverage preparation machines, such as high-pressure coffee, are known. Conventional beverage preparation machines dispense a beverage based on a user physically interacting with the beverage preparation machines. Conventional beverage preparation machines do not provide information relevant to a particular user of the beverage preparation machines. Further, conventional beverage preparation machines do not automatically perform any actions based on information such as the user of the beverage preparation machine or the environment in which the beverage preparation machine is located. What is desired is a beverage preparation machine that receives information from one or more electronic devices, such as a user's smartphone or tablet, for improving the user's experience with the beverage preparation machine.

### BRIEF SUMMARY

The present disclosure may be directed, in one aspect, to a beverage preparation machine interacting with one or more electronic devices, such as one or more mobile devices, Internet of Things (IOT) devices, servers, and the like.

In an aspect, a beverage preparation machine may include a container compartment for receiving a beverage packet comprising beverage ingredients. An outlet may dispense a beverage flavored by the beverage packet. A communication interface may be configured to receive a wireless signal from an electronic device, the wireless signal comprising an identifier of the electronic device. A processor may be operably coupled to the communication interface and may be configured to: receive the identifier of the electronic device; associate the identifier of the electronic device with a user and a beverage preference of the user; and cause the beverage dispensed by the outlet to be based on the beverage preference of the user.

In an aspect, a beverage preparation machine may include a container compartment configured to receive a beverage packet comprising beverage ingredients. An outlet may dispense a beverage flavored by the beverage packet. An interface may be configured to receive a beverage selection from a user and receive an identifier of the user. A processor may be operably coupled to the interface and may be configured to associate the identifier of the user with a beverage preference of the user and cause the beverage dispensed by the outlet to be based on the beverage preference of the user.

In an aspect, a beverage preparation machine may include a container compartment for receiving a beverage packet comprising beverage ingredients. An outlet may dispense a beverage flavored by the beverage packet. A surface may receive a vessel configured to receive the beverage. A processor may be configured to: determine an interior volume of the vessel; determine an amount of the beverage that the vessel can hold based on the interior volume of the vessel; and cause the outlet to dispense, into the vessel, an amount of the beverage that is less than the determined amount of the beverage that the vessel can hold.

In an aspect, a beverage preparation machine may include a container compartment for receiving a beverage packet comprising beverage ingredients. An outlet may dispense a beverage flavored by the beverage packet. A communication interface may be configured to receive a wireless communication from an electronic device, the wireless communication comprising information relating to the beverage preparation machine or a user of the beverage preparation machine. A user interface may be configured to display the information relating to the beverage preparation machine or the user of the beverage preparation machine.

In an aspect, a beverage preparation machine may include a container compartment for receiving a beverage packet comprising beverage ingredients. An outlet may dispense a beverage flavored by the beverage packet. A communication interface may be configured to receive a wireless communication from an Internet of Things device. A processor may be configured to cause the beverage preparation machine to perform an activity based on an indication within the wireless communication received from the Internet of Things device.

In an aspect, a beverage preparation machine may include a container compartment configured to receive one or more beverage packets comprising beverage ingredients. An outlet may be configured to dispense a beverage flavored by the one or more beverage packets. An interface may be configured to receive information relating to the one or more beverage packets, wherein the information comprises a type and an amount of the ingredients available to the beverage preparation machine for dispensing the beverage. A processor may be configured to: identify recipes for beverages producible by the beverage preparation machine using the type and the amount of the ingredients available to the beverage preparation machine; and cause the beverage preparation machine to produce the selected recipe.

In an aspect, a beverage preparation machine for dispensing a beverage may include a container compartment for receiving one or more beverage packets comprising beverage ingredients. An outlet may be configured to dispense a beverage flavored by the one or more beverage packets. A communication interface may be configured to receive information related to one or more users of the beverage preparation machine or one or more products relating to the beverage preparation machine. A processor may be configured to: identify a user of the beverage preparation machine and associate the information with the user of the beverage preparation machine; and rank the information associated with the user of the beverage preparation machine according to one or more rules. A user interface may be configured to provide, via at least one of a display or a speaker, the ranked information associated with the user of the beverage preparation machine.
In an aspect, a beverage preparation machine may include a processor configured to identify one or more faults occurring by the beverage preparation machine, wherein the one or more faults comprise a need to repair the beverage preparation machine immediately or in the future. A memory may store the one or more faults. A communication interface may be configured to: transmit, to an electronic device, a message indicating the occurrence of the one or more faults by the beverage preparation machine; and receive an indication that the message indicating the occurrence of the one or more faults has been received by the electronic device and reviewed by a user of the electronic device. A user interface may be configured to provide, via at least one of a display or a speaker, the indication that the message indicating the occurrence of the one or more faults has been received by the electronic device and reviewed by a user of the electronic device.

### BRIEF DESCRIPTION OF THE DRAWINGS

The present disclosure will become more fully understood from the detailed description and the accompanying drawings, wherein:
FIG. 1 is an example beverage preparation machine that may communicate with one or more electronic devices.
FIG. 2 is an example system diagram in which an example beverage preparation machine communicates with an electronic device.
FIG. 3 is another example system diagram in which a beverage preparation machine communicates with one or more devices, such as a server, mobile device, and another beverage preparation machine.
FIG. 4 is an example process for recognizing a user of a beverage preparation machine via a wireless communication.
FIG. 5 is an example process for automatically dispensing, into a vessel, a beverage from a beverage preparation machine based on a determination of the interior volume of the vessel.
FIG. 6 is an example process of a beverage preparation machine influencing a brewer experience by providing and/or receiving information.
FIG. 7 is an example process of a beverage preparation machine performing an activity based on an input.
FIG. 8 is an example process in which a beverage preparation machine performs an activity based on an action by an electronic device.
FIG. 9 is an example process in which a beverage preparation machine produces a selected recipe based on ingredients and/or supplies available to the beverage preparation machine.
FIG. 10 is an example process in which a beverage preparation machine automatically reorders ingredients and/or supplies for use by the beverage preparation machine.
FIG. 11 is an example process in which a beverage preparation machine provides content, such as audio content or video content.
FIG. 12 is an example process in which a beverage preparation machine manages faults and maintenance relating to the beverage preparation machine.

### DETAILED DESCRIPTION

The following description of the preferred embodiment(s) is merely exemplary in nature and is in no way intended to limit the invention or inventions. The description of illustrative embodiments is intended to be read in connection with the accompanying drawings, which are to be considered part of the entire written description. In the description of the exemplary embodiments disclosed herein, any reference to direction or orientation is merely intended for convenience of description and is not intended in any way to limit the scope of the present inventions. Relative terms such as "lower," "upper," "horizontal," "vertical," "above," "below," "up," "down," "left," "right," "top," "bottom," "front" and "rear" as well as derivatives thereof (e.g., "horizontally," "downwardly," "upwardly," etc.) should be construed to refer to the orientation as then described or as shown in the drawing under discussion. These relative terms are for convenience of description only and do not require a particular orientation unless explicitly indicated as such. Terms such as "attached," "affixed," "connected," "coupled," "interconnected," "secured" and other similar terms refer to a relationship wherein structures are secured or attached to one another either directly or indirectly through intervening structures, as well as both movable or rigid attachments or relationships, unless expressly described otherwise. The discussion herein describes and illustrates some possible nonlimiting combinations of features that may exist alone or in other combinations of features. Furthermore, as used herein, the term "or" is to be interpreted as a logical operator that results in true whenever one or more of its operands are true. Furthermore, as used herein, the phrase "based on" is to be interpreted as meaning "based at least in part on," and therefore is not limited to an interpretation of "based entirely on."

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Features of the present inventions may be implemented in software, hardware, firmware, or combinations thereof. The computer programs described herein are not limited to any particular embodiment, and may be implemented in an operating system, application program, foreground or background processes, driver, or any combination thereof. The computer programs may be executed on a single computer or server processor or multiple computer or server processors. For example, the computer programs, steps, processes, *etc.,* may be executed on one or more of beverage preparation machine, an electronic device, a server, *etc.*

Processors described herein may be any central processing unit (CPU), graphics processing unit (GPU), microprocessor, micro-controller, computational, programmable device, circuit, either alone or in combination, that is configured for executing computer program instructions (e.g., code). Various processors may be embodied in computer and/or server hardware of any suitable type (e.g., desktop, laptop, notebook, tablets, cellular phones, etc.) and may include all the usual ancillary components necessary to form a functional data processing device including without limitation a bus, software and data storage such as volatile and non-volatile memory, input/output devices, graphical user interfaces (GUIs), removable data storage, and wired and/or wireless communication interface devices including Wi-Fi, Bluetooth (*e.g.,* classic Bluetooth and Bluetooth Low Energy), LAN, etc.

Computer-executable instructions or programs (e.g., software or code) and data described herein may be programmed into and tangibly embodied in a non-transitory computer-readable medium that is accessible to and retrievable by a respective processor as described herein which configures and directs the processor to perform the desired functions and processes by executing the instructions encoded in the medium. A device embodying a programmable processor configured to such non-transitory computer-executable instructions or programs may be referred to as a "programmable device", or "device", and multiple programmable devices in mutual communication may be referred to as a "programmable system." It should be noted that non-transitory "computer-readable medium" as described herein may include, without limitation, any suitable volatile or non-volatile memory including random access memory (RAM) and various types thereof, read-only memory (ROM) and various types thereof, USB flash memory, and magnetic or optical data storage devices (e.g., internal/external hard disks, floppy discs, magnetic tape CD-ROM, DVD-ROM, optical disk, ZIP^{™} drive, Blu-ray disk, and others), which may be written to and/or read by a processor operably connected to the medium.

In certain embodiments, the present inventions may be embodied in the form of computer-implemented processes and apparatuses such as processor-based data processing and communication systems or computer systems for practicing those processes. The present inventions may also be embodied in the form of software or computer program code embodied in a non-transitory computer-readable storage medium, which when loaded into and executed by the data processing and communications systems or computer systems, the computer program code segments configure the processor to create specific logic circuits configured for implementing the processes.

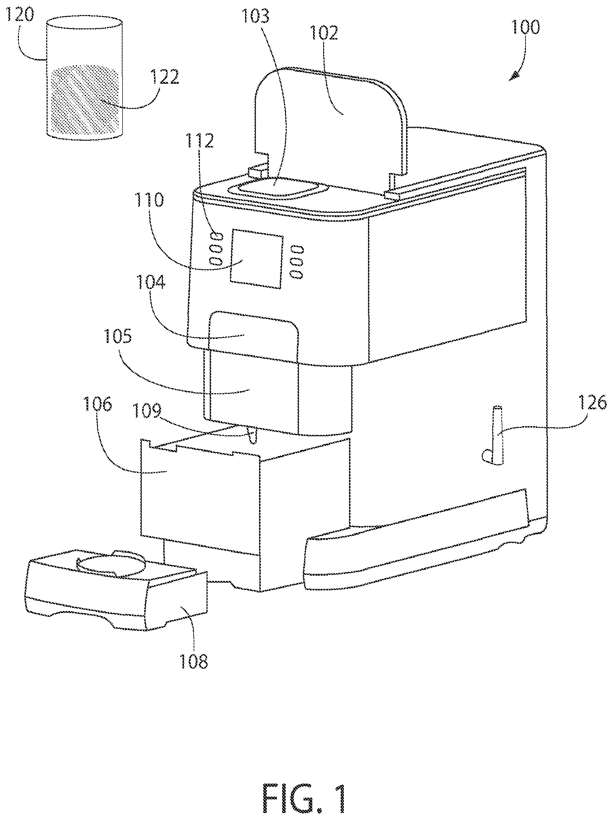

Referring now to the figures, FIG. 1 shows an example beverage preparation machine 100. Beverage preparation machine 100 may be a residential machine or a commercial machine (*e.g.,* located at a business or public location). Beverage preparation machine 100 may prepare one or more types of beverages, such as coffee, tea, chocolate, milk, soup, *etc.* Beverage preparation machine 100 may prepare a beverage by passing water (*e.g.,* hot or cold water), or another liquid, through a beverage packet, such as beverage packet 120. Beverage packet 120 may contain an ingredient, such as ingredient 122. Ingredient 122 may be a flavor ingredient to prepare the beverage. As an example, ingredient 122 may be ground coffee, tea, chocolate, or milk powder.

Beverage preparation machine 100 may mix two or more ingredients, such as water and milk powder. Beverage preparation machine 100 may perform infusion of an ingredient, such as an infusion of ground coffee, or tea, with water. One or more of ingredients 122 may be supplied in loose form, in agglomerate powder form, in liquid form, and/or in a concentrate form. A carrier or diluents liquid (*e.g.* water) may be mixed with one or more ingredients to form the beverage. One or more ingredients may be inserted into beverage preparation machine 100 via beverage packet, which may, for example, be formed of an aluminum, plastic, or paper enclosure holding ingredient 122.

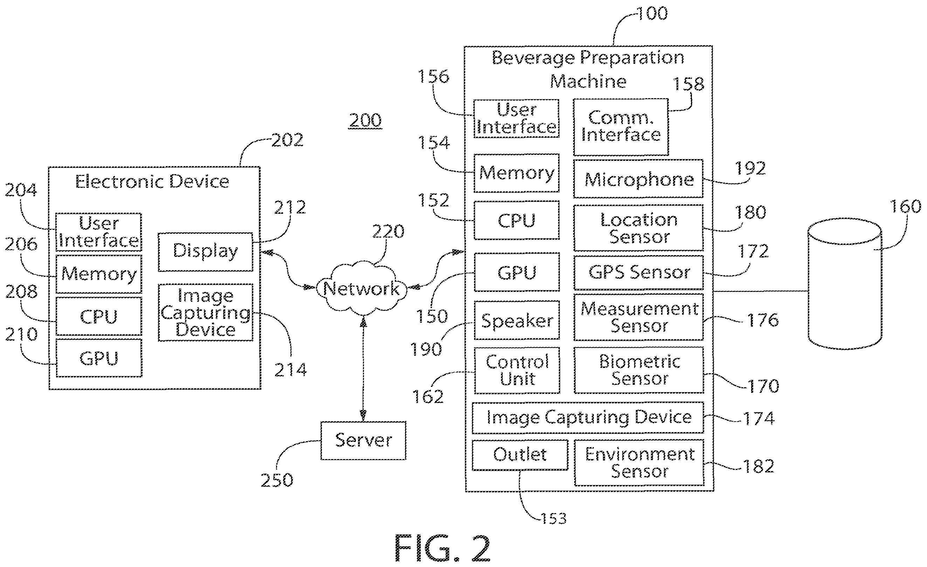

Beverage preparation machine 100 may include a water tank 103 accessible via a lid 102 on top of the apparatus 100. Beverage preparation machine 100 may include a container compartment 105 for receiving a beverage mixing pack, such as beverage packet 120. Container compartment may have a door, such as door 104. Beverage preparation machine 100 may include an outlet, such as outlet 109 (FIG. 1) or outlet 153 (FIG. 2), for dispensing and/or holding a beverage and/or through which a beverage (*e.g.,* liquid) may pass. Outlet 109/153 may be any known structure for dispensing and/or holding a beverage, such as a nozzle, spout, conduit, valve, tube, aperture, and the like. Outlet 109/153 may hold a beverage packet. In examples, outlet 109/153 may form part of the beverage packet itself. Outlet 109/153 may be configured to dispense one or more beverages flavored by one or more beverage packets, such as beverage packet 120.

Beverage preparation machine 100 may include a bin 106 which sits below the container compartment and receives beverage mixing packs after use. Bin 106 is received in a cavity formed in the beverage preparation machine 100 and is removed for emptying. A removable drip tray 108 is provided at the bottom of beverage preparation machine 100. The drip tray 108 includes a grill which forms a support surface for supporting a vessel (*e.g.,* cup) when the apparatus 100 is dispensing a beverage into a vessel. A tray portion of the drip tray 108 is located beneath the grille for catching any spillage which passes through the grille. Beverage preparation machine 100 may have a user interface 110 in the form of a display screen, speakers, and such. Beverage preparation machine 100 may include a plurality of selection buttons 112. A user may interact with (*e.g.,* control the function of) apparatus 100 via the user interface 110 and/or one or more of the selection buttons 112. For example, a user may select beverage making parameters via soft keys presented on the display and/or via the selection buttons 112.

As described herein, user interface 110 may be a display configured to display information to the user based on the user preference data. In other examples user interface 110 may be a speaker, microphone, or one or more other elements for providing information to beverage preparation machine 100 or receiving information from beverage preparation machine 100. Information (*e.g.,* personalized content) presented to the user may include favorite beverages of the user which are available for dispensing/purchase, sports content, stock content, weather content, advertisements targeted towards the user of beverage preparation machine 100, *etc.* Content provided to the user may include information that may brighten the mood of a user of beverage preparation machine 100. For example, beverage preparation machine 100 may provide fun facts via user interface and/or trivia/jokes that the user may enjoy. In examples beverage preparation machine 100 may provide information relating to the workplace of the user and/or wellness content (*e.g.,* exercise information, nutrition information) that may be of interest to the user of beverage preparation machine 100.

Beverage preparation machine 100 may include a communication interface 126. Communication interface 126 may be configured to communicate (*e.g.,* wirelessly communicate, communicate via wire) with one or more devices, such as a user device, a server, another beverage preparation machine, one or more Internet of Things (IOT) devices, *etc.* For example, communication interface 126 may comprise an antenna configured to communicate with one or more devices via NFC, Bluetooth, Wi-Fi, or other wireless technologies.

FIG. 2 is a block diagram of an example system 200 in which a beverage preparation machine 100 (FIG. 1) communicates with electronic device 202. Electronic device 202 may be one or more electronic devices, such as a mobile device (*e.g.,* mobile phone or tablet) or Internet of Things device. In examples electronic device 202 may be server 250. One or more processes may be performed by beverage preparation machine 100 and/or electronic device 202. For example, beverage preparation machine 100 may perform one or more determinations described herein and/or server 250 may perform one or more determinations described herein. In examples in which server 250 performs one or more determinations, server 250 may provide the determinations to beverage preparation machine 100. Although FIG. 2 shows beverage preparation machine 100 communicating with a single electronic device 202 and a single server 250, it should be understood that this is for illustration purposes only and beverage preparation machine 100 may communicate with one or more electronic devices and one or more servers.

As shown on FIG. 2, beverage preparation machine 100 may include an outlet, such as outlet 153 (FIG. 2) or outlet 109 (FIG. 1), as described herein. Beverage preparation machine 100 may communicate with one or more servers 250 via network 220. Beverage preparation machine 100 may communicate with one or more databases, such as database 160, via network 220 or without network 220. Server 250 may communicate with beverage preparation machines 100 via a wireless signal or a wired signal. Server 250 may include a processor and a computer-readable medium (such as a random access memory (RAM)), coupled to the processor. The processor can execute computer-executable program instructions stored in memory. Computer executable program instructions can include any number of application programs.

As described herein, electronic device 202 may be any device that can communicate (*e.g.,* electronically communicate) with beverage preparation machine 100. Beverage preparation machine 100 and electronic device 202 may communicate via a wire, wirelessly, via external devices (*e.g.,* a USB device), and such. Example electronic devices 202 may include a user device (*e.g.* a smart phone, tablet, *etc*.), another beverage preparation machine, an Internet of Things (IOT) device, a server, *etc.* An IOT device may be any device that may transmit data to another device (or person) via the Internet, as understood by those of skill in the art. IOT devices may include sensors (*e.g.,* wireless sensors), software, actuators, computer devices, and the like. Example IOT devices may include a smart light, door, key, refrigerator, cabinet, water system (such as water filtration system), thermometer and/or thermostat, GPS device, television, *etc.*

Beverage preparation machine 100 may communicate with one or more electronic devices 202 to provide information to electronic device 202 and/or to receive information from electronic device 202. The information provided from beverage preparation machine 100 to electronic device 202 may include information of the status of beverage preparation machine 100. Statuses may include fault statuses, power statuses, *etc.,* of beverage preparation machine 100. For example, beverage preparation machine 100 may indicate to electronic device 202 that beverage preparation machine 100 is experiencing a fault and/or may experience a fault in the future. Beverage preparation machine 100 may identify the fault via a name, a code (*e.g.,* a code number), a type, a priority, a resolution, an estimated time to resolve, and the like. Beverage preparation machine 100 may notify a user that a fault exists via one or more communication methods, such as via SMS messaging, telephone, email, display (*e.g.,* a message displayed on user interface 156 of beverage preparation machine 100), *etc.*

Beverage preparation machine 100 may take action (*e.g.,* automatically take action) to correct a fault. For example, beverage preparation machine 100 may take action to correct the fault based on the permission and/or acknowledgement provided by the user. For example, upon detection of a fault, beverage preparation machine 100 may request permission from the user to correct the fault. In other examples, beverage preparation machine 100 may take action to correct the fault without requesting permission of the user, such as correcting the fault automatically. The user may indicate which faults may be corrected automatically, and which faults require acknowledgement and/or permission by the user. Beverage preparation machine 100 may identify methods to correct the fault. Beverage preparation machine 100 may indicate methods to correct the fault to the user of the beverage preparation machine 100, to a technician, *etc.*

Beverage preparation machine 100 may designate which faults can be corrected by a user, and which faults require a technician for correction. Beverage preparation machine 100 may notify one or more persons and/or entities of the status of beverage preparation machine 100, which may be designated during configuration of beverage preparation machine 100. For example, beverage preparation machine 100 may be configured to send fault information requiring a highly technical solution only to a technician and/or to send fault information requiring a less highly technical solution (*e.g.,* such as a reboot of the machine) only to a user of the beverage preparation machine 100.

Beverage preparation machine 100 may provide (*e.g.,* present to a user or a technician) actions that may correct the fault. Beverage preparation machine 100 may save (*e.g.,* log) fault information, repair information, *etc.* in a database or another storage element, such as memory 154. For example, beverage preparation machine 100 may store information relating to the fault, the amount of time that the fault caused the beverage preparation machine 100 to be inoperable, the severity of the fault, the party that corrected the fault, and/or the method used to correct the fault. Although examples provided herein describe beverage preparation machine 100 providing information relating to beverage preparation machine 100, it should be understood that these examples are for illustration purposes only. Examples may include another device, such as server 250, providing information relating to beverage preparation machine 100.

Beverage preparation machine 100 may indicate (*e.g.,* indicate to electronic device 202) the power status of beverage preparation machine 100, such as whether beverage preparation machine 100 is powered on, powered off, receiving power via a main source (*e.g.,* an AC circuit), receiving a power from a backup source (*e.g.,* via a DC circuit), *etc.* Beverage preparation machine 100 may indicate (*e.g.,* indicate to electronic device 202) an inventory status of beverage preparation machine 100. For example, beverage preparation machine 100 may indicate the number of beverage packs in inventory and/or purchased, the number of beverage packs used, *etc.* Beverage preparation machine 100 may indicate when beverage packs should be repurchased, for example, based on the inventory information.

Beverage preparation machine 100 may provide information relating to the location and/or environment of the beverage preparation machine 100. Location information may be determined via location sensor 180, such as a GPS sensor 172, a geolocation sensor, and the like. Location information may include the GPS location of beverage preparation machine 100, geolocation information of beverage preparation machine 100, relative location information of beverage preparation machine 100, and the like. Location information of beverage preparation machine 100 may be determined via crowd sensing, in which locations of other (*e.g.,* proximate to beverage preparation machine 100) devices update location information of beverage preparation machine 100. Location of beverage preparation machine 100 may be determined via geolocation methods. Geolocation may be used to determine the location of beverage preparation machine 100 within an area, such as within a building. For example, geolocation may be used to triangulate Wi-Fi signals within a building to determine a location within the building.

The location of beverage preparation machine 100 may be associated with a room, hallway, building, *etc.* For example, when the location of the beverage preparation machine 100 is determined (*e.g.,* determined via geolocation, GPS, crowd sensing) within a building, the location of beverage preparation machine 100 within building can be associated with a room (*e.g.,* conference room, break room, cafeteria, hallway, *etc*.). The location and/or association information may be provided to the electronic device 202, server 250, *etc.* In other examples the location information (*e.g.,* latitude/longitude information, address information, association information, *etc.*) may be determined by a device external to beverage preparation machine 100 (such as server 250) and/or provided to electronic device 202 or another device.

Information relating to the environment in which beverage preparation machine 100 is located may be determined. Environment information may include temperature information of the environment in which beverage preparation machine 100 is located (*e.g.,* temperature information of inside the building and/or outside the building in which the beverage preparation machine 100 is located), humidity information, precipitation information (*e.g.,* sun, snow, rain, *etc.*), *etc.* Environment information may be determined via an environment sensor 182 within beverage preparation machine 100, such as a temperature sensor, humidity sensor, precipitation sensor, *etc.* Environment information may be determined externally from the beverage preparation machine 100, such as via server 250, via weather forecasting services, and the like.

Information relating to personal preferences (*e.g.,* personal preferences of a user of the beverage preparation machine 100) may be determined. For example, coffee preference of a user may be determined. The coffee preferences may be based on day of week, a time of day, *etc.* Preferences may be determined via an input of a user, such as a user identifying her preference or beverage preparation machine 100 determining the preferences of the user via the beverage selections of the user. The beverage selections may be made from one or more days. For example, the user may select a beverage over a seven day period. Beverage preparation machine 100 may associate the beverage selections (*e.g.,* over the seven day period) with the user. Beverage preparation machine 100 may list the beverage preferences, for example, from most desired beverage to least desired beverage.

Beverage preparation machine 100 may associate the beverage selections with the user via the user providing (*e.g.,* physically providing, such as via user interface 156) the identity of the user. In other examples, beverage preparation machine 100 may associate the identity of the user via an electronic device 202 associated with the user. For example, when the user selects a beverage, beverage preparation machine 100 may determine the identity of the user by determining that the user's electronic device 202 is most proximate to beverage preparation machine 100 when the beverage is selected. Beverage preparation machine 100 may provide identity protections of user of beverage preparation machine 100, for example, such that the name of a user may be protected. Such protections may include a user being associated with a unique code (and not the name of the user). In other examples beverage preparation machine 100 may aggregate two or more users and mask the users so that the users obtain a level of anonymity.

As described herein, beverage preparation machine 100 may associate a user via electronic device 202 of the user. Beverage preparation machine 100 may receive information relating to one or more users (*e.g.,* users of the beverage preparation machine 100), for example, via electronic device 202. Based on information provided on user's electronic device 202, beverage preparation machine 100 may receive calendar information of one or more users. Beverage preparation machine 100 may determine the dates, times, types (*e.g.,* business, personal), and/or duration of events based on the user's calendars. Events may include business/personal meetings, times of arrival/departures, *etc.*

Beverage preparation machine 100 may determine the type of day a user is having based on the user's calendar information. For example, the beverage preparation machine 100 may determine whether the user is expected to have a busy day, a stressful day, a short/long day, *etc.,* based on the number of meetings scheduled for the user and/or participants of the meetings. Beverage preparation machine 100 may suggest beverages to one or more users based on the type of day a user is expected to have (*e.g.,* predicted to have). For example, beverage preparation machine 100 may identify a beverage that may relax a user that is expected to have a stressful day, a beverage that may focus a user expected to meet with those that user reports to, a beverage that may energize a user expected to have a long day, and the like.

Artificial Intelligence techniques, such as machine learning techniques, may be used to determine the type of day a user is determined (*e.g.,* predicted) to have. For example, beverage preparation machine 100 may determine that a user will have back to back meetings. Based on artificial intelligence techniques, the beverage preparation machine 100 may determine the user may be tired, mentally exhausted, *etc.,* and would benefit from functional beverages (*e.g.,* beverages with caffeine, beverages with green tea, beverages with electrolytes, *etc*.). The beverage preparation machine 100 may suggest beverages to keep a user awake, to relieve and/or destress the stress incurred by a user, to energize the user, *etc.* The beverage preparation machine 100 may dispense (*e.g.,* automatically dispense, or brew) beverages determined to be beneficial to a user, in some examples.

In other examples, beverage preparation machine 100 may activate a vending display mode when a user is proximate to beverage preparation machine 100. The vending display mode may display elements used by a user in selecting a beverage and/or may suggest a beverage to the user of beverage preparation machine 100, for example, via a user interface.

Beverage preparation machine 100 may determine that a user is proximate via a proximity sensor, via a beacon signal, *etc.* Beverage preparation machine 100 may determine other eating and/or drinking actions that may be beneficial to a user. For example, the beverage preparation machine 100 may recommend that the user drink an amount of water (*e.g.,* if the user has consumed a lot of coffee), as coffee is a known diuretic and multiple coffees can be known to cause dehydration. The recommendation may be provided via beverage preparation machine 100 when the user is proximate, in examples. In other examples, beverage preparation machine 100 may indicate to user (*e.g.,* via reminders) that user should drink certain beverages through electronic device 202 of user. For example, beverage preparation machine 100 may send an SMS message to user, via electronic device 202, that it is time for the user's afternoon coffee, that the user should drink water, *etc.*

As shown in FIG. 2 and described herein, system 200 includes electronic device 202 communicating with beverage preparation machine 100 via a network 220. Network 220 may be the Internet, in some examples. In other examples, network 220 may be Wi-Fi, Bluetooth, LAN, *etc.* Network 220 may include one or more wired and/or wireless communication networks. For example, electronic device 202 (such as a user device and/or IOT device) may communicate with the beverage preparation machine 100 via a Bluetooth protocol upon the electronic device 202 being located within a predefined distance of the beverage preparation machine 100. Electronic device 202 may communicate with beverage preparation machine 100 based on a user command and/or electronic device 202 may communicate with beverage preparation machine 100 automatically. For example, electronic device 202 may automatically communicate with beverage preparation machine 100 based on a schedule (*e.g.,* every 1 hour), based on electronic device 202 and beverage preparation machine 100 being proximate to one another (*e.g.,* within a predefined location of one another), based on an event (*e.g.,* a scheduled meeting), *etc.*

As shown on FIG. 2, electronic device 202 may include a user interface 204, a memory 206, a central processing unit (CPU) 208, a graphics processing unit (GPU) 210, an image capturing device 214, and/or a display 212. User interface 204 may allow a user to interact with electronic device 202. In examples user interface 204 may be a display. For example, user interface 204 may be a display that includes soft keys for providing information to the user. In examples user interface 204 may include hard keys or no keys at all (*e.g.,* user interface 204 may be a display, such as display 212. In other examples user interface 204 may be an external hardware keyboard configured to communicate with IOT device 204 via a wired or a wireless connection (*e.g.,* a Bluetooth keyboard), an external mouse, or any other user-input device.

Memory 206 may store instructions executable on the CPU 208 and/or the GPU 210. The instructions may include machine readable instructions that, when executed by CPU 208 and/or GPU 210, cause the CPU 208 and/or GPU 210 to perform various acts. Memory 206 may store instructions that when executed by CPU 208 and/or GPU 210 cause CPU 208 and/or GPU 210 to enable user interface 204 to interact with a user. For example, executable instructions may enable user interface to display (via Display 212) one or more prompts to a user, and/or accept user input. Instructions stored in memory 206 may enable a user to select a type of beverage (*e.g.* coffee) to be dispensed from beverage preparation machine 100, for example. A user may utilize user interface 204 to schedule a future brewing of coffee by selecting the type of coffee to be brewed, as well as the date and time of brewing. In other examples, a user may utilize user interface 204 to click, hold, or drag a cursor to define one or more coffee brewing parameters (*e.g*., temperature, ounces to be dispensed, *etc.*).

CPU 208 and/or GPU 210 may be configured to communicate with memory 206 to store to and read data from memory 206. For example, memory 206 may be a computer-readable non-transitory storage device that may include any combination of volatile (*e.g.,* random access memory (RAM)) or non-volatile (*e.g.,* battery-backed RAM, FLASH, *etc*.) memory. Image capturing device 214 may be configured to capture an image. The image may be an identifier of beverage preparation machine 100, such as a serial number associated with beverage preparation machine 100 or a QR code associated with beverage preparation machine 100.

System 200 includes beverage preparation machine 100. As shown in FIG. 2, beverage preparation machine 100 may include a CPU 152, memory 154, GPU 150, user interface 156, communication interface 158, and image capturing device 174. As described herein, CPU 152 and/or GPU 150 may form a processor, either alone or in combination with a microprocessor, micro-controller, computational, programmable device, or circuit.

Memory 154 may be configured to store instructions executable on the CPU 152 and/or the GPU 150. The instructions may include machine readable instructions that, when executed by CPU 152 and/or GPU 150, cause the CPU 152 and/or GPU 150 to perform various acts. CPU 152 and/or GPU 150 may be configured to communicate with memory 154 to store to and read data from memory 154. For example, memory 154 may be a computer-readable non-transitory storage device that may include any combination of volatile (*e.g.,* random access memory (RAM)) or a non-volatile memory (*e.g.,* battery-backed RAM, FLASH, *etc*.) memory.

User interface 156 may be configured to allow a user of beverage preparation machine 100 to interface with beverage preparation machine 100. For example, user interface 156 may include a user-input device such as an interactive portion of display 110 (*e.g.,* "soft" key displayed on display 110), selection buttons 112, an external hardware keyboard configured to communicate with beverage preparation machine 100 via a wired or a wireless connection, an external device, or any other user-input device.

Communication interface 158 may be configured to enable beverage preparation machine 100 to communicate (*e.g.,* interface) with one or more devices internal or external to beverage preparation machine 100. For example, communication interface 158 may be configured to enable beverage preparation machine 100 to interface with electronic device 202, one or more other electronic devices (such as one or more other beverage preparation machine 100), and/or beverage dispensing database 160. Beverage dispensing database 160 may store information relating to coffee consumption, such as a user's coffee preferences, locations of beverage preparation machine 100, *etc.* The information stored within beverage dispensing database 160 may be used to provide coffee experiences that are unique to one or more users of beverage preparation machine 100.

Image capturing device 174 may be configured to capture an image. The image may be an identifier of beverage preparation machine 100 and/or vessel receiving a beverage from beverage preparation machine 100 (such as a serial number or a QR code associated with beverage preparation machine 100 and/or vessel). The image may be an identifier of vessel, such as a cup, mug, or other container for holding a beverage. The image may be a shape of vessel. Image capturing device 174 may be configured to capture images of previously brewed beverage, for example, so that the beverage preparation machine 100 can emulate the image of the previously brewed beverage. As an example, beverage preparation machine 100 may attempt to brew coffee according to a color (*e.g.,* having a defined amount of sugar or cream), fill amount, *etc.,* based on the image. Image capturing device 174 may be configured to take an image of a beverage to identify the name of the beverage, the ingredients of the beverage, the brew time, as well as other parameters of the beverage (*e.g.,* such as the temperature at which the beverage is to be brewed).

Image capturing device 174 may be configured to capture an image external to a vessel and/or internal to a vessel. For example, image capturing device 174 may be configured to capture an image of an interior of a vessel so that the image can be used to determine an internal volume of the vessel. For example, one or more elements (*e.g.,* processor, server, measurement sensor 176, and/or control unit 162) may determine the volume of the interior of the vessel based on the image of the interior of the vessel. Image capturing device 174 may be configured to capture an image in a digital format having a number of pixels.

Although image capturing device 174 is illustrated in FIG. 2 as internal to beverage preparation machine 100, in other examples image capturing device 174 may be internal and/or external to beverage preparation machine 100. For example, image capturing device 174 may be implemented as a camera coupled to electronic device 202. Image capturing device 174 may be implemented as a webcam coupled to electronic device 202 and configured to communicate with electronic device 202. Image capturing device 214 may be implemented as a digital camera configured to transfer digital images to electronic device 202 and/or to beverage preparation machine 100. Such transfers may occur via a cable, a wireless transmission, network 220, and/or a physical memory card device transfer (*e.g.,* SD Card, Flash card, *etc*.), for example.

Beverage preparation machine 100 may include a control unit, such as control unit 162. Control unit 162 may be configured to control one or more beverage operations of beverage preparation machine 100. Control unit 162 may be configured to control a brewing of beverage preparation machine 100 based on an input received from communication interface 158 and/or user interface 156. In examples control unit 162 may be located internal to beverage preparation machine 100 and/or external to beverage preparation machine 100.

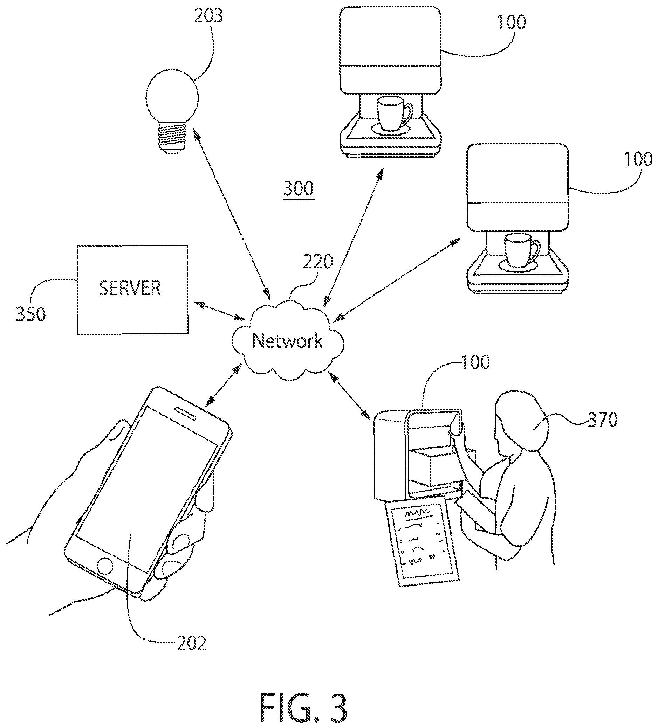

FIG. 3 is an example system 300 including one or more beverage preparation machines 100 and/or one or more electronic devices 202. As shown on FIG. 3, beverage preparation machines 100 may communicate with an IOT device, such as lighting device 203 System 300 may include one or more servers 350 communicating with one or more beverage preparation machine 100. Servers 350 may be configured with an operating system which may run one or more applications. The applications may be configured to provide services to the beverage preparation machine 100 and/or one or more of the electronic devices 202. Server 350 may be a data server, a web server, a cloud computing device, or the like. System 300 may include one or more users 370 (e.g., beverage drinkers, maintainers of beverage preparation machine 100, *etc.)* of beverage preparation machine 100. Beverage preparation machine 100, electronic devices 202 (such as a user device), and/or server 350 may communicate with one another via a network, such as network 220.

A user 370 may interact with beverage preparation machine 100 in one or more ways. For example, a user may interact with beverage preparation machine 100 to receive a beverage and/or content from beverage preparation machine 100, to provide input to beverage preparation machine 100, *etc.* In such examples, user 370 may interact with beverage preparation machine 100 to request maintenance of the beverage preparation machine 100, request cleaning of the beverage preparation machine 100, request stocking of supplies necessary for the use of beverage preparation machine 100, *etc.* The user may interact with beverage preparation machine 100 using one or more electronic devices, via physically actuating buttons (soft keys on display 112 or actual keys) on the beverage preparation machine 100, *etc.* For example, user 370 may request maintenance, cleaning, stocking, *etc.,* of beverage preparation machine 100 using one or more electronic devices, via physically actuating buttons on the beverage preparation machine *100, etc.*

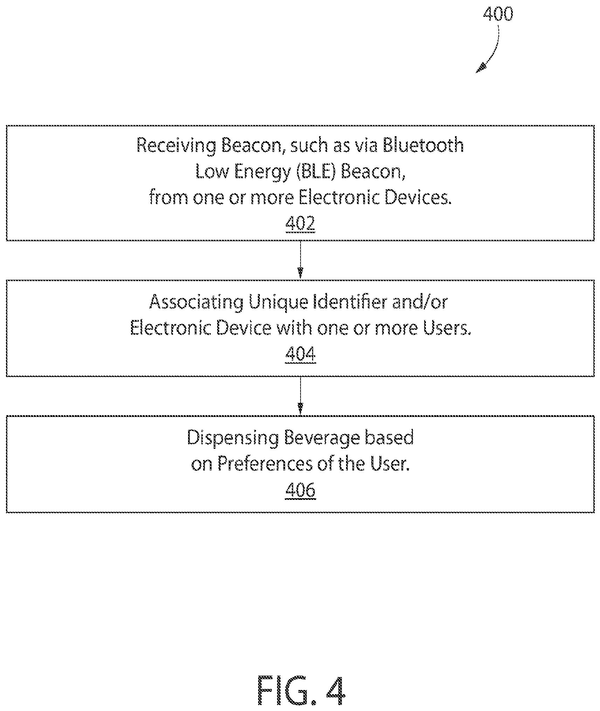

FIG. 4 shows an example process 400 for recognizing a person via a wireless signal (such as a wireless beacon). As described herein, beverage preparation machine 100 may be connected to one or more electronic devices 202, such as a user device *(e.g.,* a mobile phone) or a server 250. Beverage preparation machine 100 and electronic devices 202 may communicate via Bluetooth. At 402, beverage preparation machine 100 may receive a beacon, such as via a Bluetooth low energy (BLE) beacon, from one or more of electronic devices 202. For example, beverage preparation machine 100 may receive a unique identifier transmitted from electronic device 202 via Bluetooth. At 404, beverage preparation machine 100 may associate the unique identifier and/or the electronic device 202 with one or more users. Beverage preparation machine 100 may determine preferences, schedules, and the like, of the user based on previous activity with electronic device 202 and/or beverage preparation machine 100. In examples, beverage preparation machine 100 may determine preferences, schedules, and the like, of the user based on the user creating a profile (*e.g.,* via an application). At 406, beverage preparation machine 100 may dispense a beverage based on the preferences of the user.

As described herein, beverage preparation machine 100 may identify a user via an electronic device 202 (*e.g.,* a unique identifier provided by electronic device 202) of the user. After beverage preparation machine 100 determines that a particular user is using beverage preparation machine 100 and/or is located proximate (*e.g.,* within a distance, such as five feet) of beverage preparation machine 100, beverage preparation machine 100 may provide recommendations to the user. Beverage preparation machine 100 may display the recommendations, for example, via user interface 156. Beverage preparation machine 100 may transmit recommendations to electronic device 202 such that user can view the recommendations on electronic device 202. Beverage preparation machine 100 may recommend drinks (such as favorite drinks of the user) based on the user's previous history of desired beverages, based on a profile created by the user, and the like. In other examples, beverage preparation machine 100 may recommend a beverage to user based on preferred beverage choices of co-workers, of a group of beverages trending in an area local to the user or national/global, of a user's status (*e.g.,* manager), of a time of day (*e.g.,* morning or afternoon), of a time of year (*e.g.,* winter or summer), *etc.*

As described herein, user may receive information relating to beverage preparation machine 100 via beverage preparation machine 100 (*e.g.,* via user interface 156 of beverage preparation machine 100) or via electronic device 202. For example, beverage preferences may be provided to the user via electronic device 202 of user and/or via an interface of beverage preparation machine 100, such as buttons 112 and display 110 (FIG. 1). Beverage preparation machine 100 may save the user preferences to a database (such as beverage dispensing database 160, shown on FIG. 2). In other examples the preferences may be provided by the electronic device 202 (*e.g.,* via an application on electronic device 202) or the preferences may be provided by the server 350 (such as a cloud server) and/or one or more other electronic devices 202.

Recognition of a user may be provided via biometric and/or sentiment information. For example, beverage preparation machine 100 may include a biometric sensor, such as biometric sensor 170. Biometric sensor 170 may recognize (*e.g.,* identify) a user via the fingerprint of the user (using a finger print reader), an image of the user (using a digital camera), an optical scanning of the user, a voice scan of the user, an infra-red image of the user (using an infra-red camera), and the like. Recognition of the user may be provided via a beacon of the electronic device 202 of the user, as described herein. Beverage preparation machine 100 may identify a user as he/she approaches beverage preparation machine 100, for example, via a BLE beacon originating from the electronic device 202 of the user and/or via beverage preparation machine 100 generating and/or analyzing an image of the user.

Beverage preparation machine 100 may prepare (*e.g.,* automatically prepare) a beverage based on an identity of the user. For example, beverage preparation machine 100 may prepare a preferred beverage of the user when beverage preparation machine 100 identifies (*e.g.,* via a beacon, fingerprint, image) user and/or determines that user is proximate to beverage preparation machine 100. In other examples, beverage preparation machine 100 may prepare a preferred beverage when beverage preparation machine 100 determines that user is on her way to beverage preparation machine 100. Such determination may be based on a time of day, the direction the user is moving, the speed of user, and the like. In other examples, user may remotely indicate to beverage preparation machine 100 to prepare a beverage, and beverage preparation machine 100 will prepare the beverage so that the beverage is ready when user arrives at beverage preparation machine 100. Beverage preparation machine 100 may make beverage recommendations to the user based on the prior history of the user, the prior history of co-workers, what is trending, *etc.* Such interaction with the user and the beverage preparation machine 100 may result in beverage preparation machine 100 being more interactive and creating a more relevant experience to the user as the beverage preparation machine 100 appears more empathetic to the user's beverage needs.

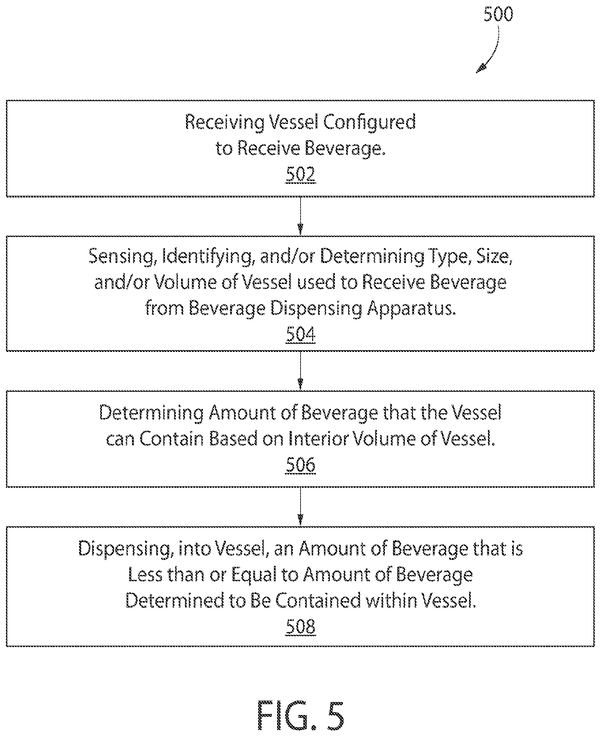

FIG. 5 shows an example process 500 for dispensing (*e.g.,* automatically dispensing) a beverage into a vessel based on a determination of the interior volume of the vessel. At 502, beverage preparation machine 100 may receive a vessel configured to receive a beverage. Beverage preparation machine 100 may sense, identify, and/or determine characteristics of a vessel (*e.g.,* container, cup, *etc*.) provided to beverage preparation machine 100 for receiving a beverage. For example, at 504, beverage preparation machine 100 may be configured to sense, identify, and/or determine the type, size, volume, *etc.,* of vessel used to receive a beverage from the beverage preparation machine 100. At 506, beverage preparation machine 100 may determine an amount of beverage that the vessel can contain based on the interior volume of the vessel. For example, beverage preparation machine 100 may determine the amount of beverage that the vessel can contain based on an image of the vessel, an electronic device (*e.g*., an RFID tag) associated with the vessel, an identification of the vessel (*e.g.,* a QR code on the vessel or other identification marks provided on the vessel and read by the beverage preparation machine 100), a weight of the vessel, dimensions (*e.g.,* length, width, height) of the vessel identified by the beverage preparation machine 100, *etc.* At 508, beverage preparation machine 100 may dispense, into the vessel, an amount of beverage that is less than or equal to the amount of the beverage determined to be contained within the vessel.

Beverage preparation machine 100 may determine the volume (*e.g.,* interior volume) of a vessel via a measurement sensor 176, such as light emitting and receiving sensor (*e.g.,* laser), audio transmitting and receiving sensor, and the like. For example, beverage preparation machine 100 may determine the volume of the interior of a vessel by capturing an image of the interior (*e.g.,* via image capturing device 174), by sending light (*e.g.,* a laser) and/or audio within the interior of the vessel, and/or via a profile (*e.g.,* saved profile) of a particular vessel. The length, width, and height of the vessel may be determined via one or more of the methods described herein. Based on measurements of the vessel, calculations of the volume of vessel may be determined by beverage preparation machine 100.

After the volume of the vessel is determined, the amount of beverage (*e.g.,* the ounces of beverage) that may be dispensed within the vessel may be determined. The amount of beverage may be based on the volume of the vessel (*e.g.,* interior volume of the vessel) and/or the amount of beverage may be based on user preferences. For example, if the vessel has a volume that is less than the amount of beverage a user prefers to consume, beverage preparation machine 100 may dispense an amount of beverage in the vessel that fills (*e.g.,* substantially fills) the vessel, although the amount may be less than the amount that the user prefers. If the vessel has a volume that is more than the amount of beverage a user prefers to consume, beverage preparation machine 100 may dispense an amount of beverage in the vessel that does not fill the vessel, but is the amount that the user prefers.

Although in examples beverage preparation machine 100 may determine the volume of the beverage to be dispensed, in other examples one or more of the electronic device 202 (such as a user device), a server (such as a cloud server), *etc.,* may determine the volume of the beverage to be dispensed into vessel. For example, based on the type, size, volume, *etc.* of the container, server 250 may determine an amount of beverage to be dispensed to the vessel. In such example, server 250 may indicate to beverage preparation machine 100 the volume of beverage to be dispensed by beverage preparation machine 100. The beverage preparation machine 100 may dispense (*e.g.,* automatically dispense) the determined appropriate amount of the beverage to the vessel, for example, when the user presents the vessel to beverage preparation machine 100.

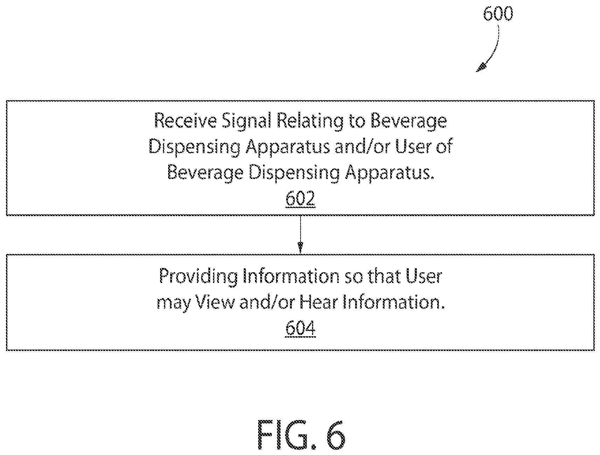

FIG. 6 shows an example process 600 for influencing a brewer experience, for example, by providing and/or receiving secondary information. At 602, beverage preparation machine 100 may receive a signal (*e.g.,* a wireless signal) relating to beverage preparation machine 100, user of beverage preparation machine 100, *etc.* One or more electronic devices 202 may provide information to beverage preparation machine 100. The information provided to beverage preparation machine 100 may assist in the management, operation, and/or servicing of beverage preparation machine 100. Such information provided by electronic devices 202 may improve a user's brewing experience.

Beverage preparation machine 100 may communicate with one or more electronic devices 202. The electronic devices 202 may provide information to the beverage preparation machine 100 and/or one or more of the electronic devices 202 may receive information from beverage preparation machine 100. For example, electronic devices 202 may provide temperature information, news information, location information, beverage trending information (such as beverages dispensed by beverage preparation machine 100 that are presently popular, previously popular, and/or expected to be popular in the future), use information of beverage preparation machine 100 (such as how often the beverage preparation machine 100 is used, a breakdown of the users who use the beverage preparation machine 100, a history of the beverages dispensed, *etc.*). For example, beverage preparation machine 100 may receive information that relates to news (*e.g.*, breaking news), sports updates, stock updates, as well as other information of interest to users of beverage preparation machine 100. Beverage preparation machine 100 may send location information to electronic device 202, which may allow electronic device 202 to determine which information is local to beverage preparation machine 100. Beverage preparation machine 100 may determine information (*e.g.,* news) that may be considered more important to a user of beverage preparation machine 100 and/or more current. The information considered more important and/or more current may replace (*e.g.,* replace on user interface) information that is considered less important and/or less current. Beverage preparation machine 100 may receive such information from the Internet, from server 250, from one or more electronic devices (such as IOT devices and/or user devices), from crowd sourcing, and the like.

At 604, beverage preparation machine 100 may provide (*e.g.,* present) the information so the user may view and/or hear the information. Beverage preparation machine 100 may identify a user based on the users mobile device, and may provide information to the user that is of interest to the particular user. The mobile device of the user may be different than the electronic device providing information to beverage preparation machine 100. Beverage preparation machine 100 may present the information via display 110 (FIG. 1). Beverage preparation machine 100 may provide the information via speakers 190 or receive the information via microphone 192 or selection buttons, as described herein. The information provided by the beverage preparation machine 100 may be tailored to the interests of a particular user or a group of users. The information may be provided in response to a request by the user or the information may be provided automatically. For example, a user may request that beverage preparation machine 100 provide a recommended beverage. In response to the request, beverage preparation machine 100 may provide a recommendation (*e.g.,* a beverage recipe recommendation and/or a planogram recommendation). In other examples beverage preparation machine 100 may provide the recommendation absent a request from the user. In such examples beverage preparation machine 100 may make the recommendation based on a schedule (*e.g.,* a daily recommendation, a weekly recommendation, and the like), based on an event (*e.g.,* a release of a new ingredient, a review of a beverage, *etc*.), based on a request from another user, and the like.

As provided herein, information/data may be provided to and/or received from the beverage preparation machine 100 via one or more electronic devices 202 and/or servers 250. Electronic devices 202 may provide the information (such as weather information, temperature information, and/or calendar information) to influence behaviors of beverage preparation machine 100. For example, a preference for a drink may change based on a weather condition outside of the building in which a user is located and/or a temperature condition within the building in which the user is located. For example, a user may desire a certain beverage (*e.g.,* iced coffee) in the summer heat and another beverage (*e.g.,* hot chocolate) in the winter cold. Beverage preparation machine 100 may identify conditions in which preferences of a user may be affected and may determine beverages to be recommended and/or dispensed based on these conditions. For example, beverage preparation machine 100 may identify a time of day and determine that the user desires a strong blend of coffee (having an increased level of caffeine) in the morning and a weaker blend (or tea) in the afternoon. Beverage preparation machine 100 may provide recommendations to the user accordingly.

Beverage preparation machine 100 may receive information that enables a prediction of use of beverage preparation machine 100 and/or a prediction of future use of beverage preparation machine 100. For example, beverage preparation machine 100 may determine the number of users of beverage preparation machine 100 in a room (*e.g.,* a conference room) housing the beverage preparation machine 100 and/or the number of users of beverage preparation machine 100 located proximate to beverage preparation machine 100. Beverage preparation machine 100 may determine the number of users of beverage preparation machine 100 entering a building housing the beverage preparation machine 100 (*e.g.,* in the morning), the number of users exiting the building (*e.g.,* in the evening), the number of users in the building, *etc.*

Beverage preparation machine 100 may determine the number of users based on a beacon (such as Bluetooth beacon), a GPS location, a geolocation, and the like, as described herein. In other examples, the beverage preparation machine 100 may determine a predicted number of users of beverage preparation machine 100 based on available calendar data (such as Outlook calendar data of one or more of the users). For example, beverage preparation machine 100 may determine the amount of users of beverage preparation machine 100 entering a meeting, exiting a meeting, or attending a meeting based on calendar data of the users. Beverage preparation machine 100 may determine (*e.g.,* predict) beverage consumption based on the current location of the users and/or the future location of the users.

Beverage preparation machine 100 may perform an activity (such as a start up, shut down, *etc*.) based on the locations and/or future locations of the users of beverage preparation machine 100. For example, beverage preparation machine 100 may warm up beverage preparation machine 100, cool down beverage preparation machine 100, begin to heat up water, *etc.,* based on the number of users that are expected to be within a predetermined distance of beverage preparation machine 100 (*e.g.*, within a predetermined time). Beverage preparation machine 100 may begin to warm up when the number of users begin to appear within a predefined distance of beverage preparation machine 100. Beverage preparation machine 100 may begin to cool down when the number of users within a predefined distance of beverage preparation machine 100 decreases or when the users exit a location (such as a room in which beverage preparation machine 100 is located). Beverage preparation machine 100 may dispense a certain beverage (such as coffee) based on a preference of one or more (*e.g.,* the majority) of users of beverage preparation machine 100 proximate to beverage preparation machine 100. By performing (*e.g*., autonomously performing) beverage preparation (such as coffee brewing) tasks based on user presence (including predicted presence) and/or preference, beverage preparation machine 100 will be able to anticipate beverage needs of users and which will result in happier consumers of beverages. As a result, it is expected that consumer complaints about brewer performance will be reduced.

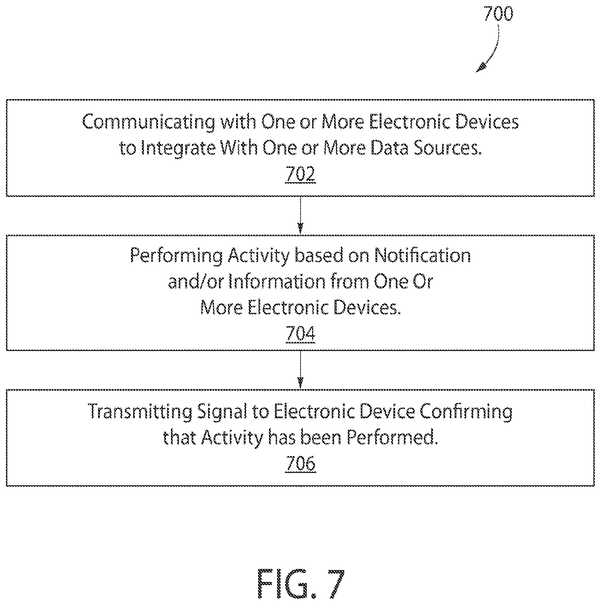

FIG. 7 shows an example process 700 of beverage preparation machine 100 performing an activity based on an input. At 702, beverage preparation machine 100 may communicate with one or more electronic devices 202 (*e.g.,* IOT devices, mobile devices, servers, *etc*.). Communicating with electronic devices 202, servers, *etc.,* may allow beverage preparation machine 100 to integrate with one or more data sources and/or IOT devices. The IOT devices, for example, may exist within a workplace environment, a home environment, as well as any other environment in which a beverage provided by beverage preparation machine 100 may be consumed. As an example, beverage preparation machine 100 may communicate with one or more other beverage preparation machines 100. In another example beverage preparation machine 100 may communicate with one or more IOT devices, such as printers, rooms (*e.g.* bathrooms, kitchens, living room, conference rooms, cafeterias, *etc.*), smart devices within the rooms, such as smart toilets, smart sinks, refrigerators, water filtration devices, lighting devices, electricity, *etc.*

As an example, beverage preparation machine 100 may communicate with a smart lighting device. Beverage preparation machine 100 may receive a notification from smart lighting device when the lighting device is turned on or turned off. At 704, beverage preparation machine 100 may perform an activity (*e.g*., an activity based on the notification and/or information). For example, beverage preparation machine 100 may power up when lighting device is turned on and beverage preparation machine 100 may power down when lighting device is turned off. As another example, beverage preparation machine 100 may determine how long the lights are turned on, the typical time at which the light is turned on/off, the time from the light being turned and the user of beverage preparation machine 100 requesting a beverage, *etc.* Based on the light information, as well as the correlation between the light data and the consumption habits of users, beverage preparation machine 100 may perform actions accordingly. For example, beverage preparation machine 100 may begin preparing a beverage at the time from the lights going on that a user typically desires a beverage. At 706, the communication interface may transmit a signal to electronic device 202 (*e.g.,* mobile device of user). For example, upon performance of the activity, the communication interface may transmit a signal to electronic device 202 confirming that the activity has been performed.

Beverage preparation machine 100 may aggregate (*e.g.,* group) data received from one or more electronic devices 202 and servers. By aggregating data from one or more electronic devices (such as IOT devices), beverage preparation machine 100 may provide for an ecosystem that may assist in streamlining the responsibilities of persons typically responsible for obtaining a beverage (*e.g.,* coffee). For example, beverage preparation machine 100 may determine consumption habits of one or more users of beverage preparation machine 100. By anticipating and/or streamlining consumption habits of users, beverage preparation machine 100 may result in a less time consuming experience while obtaining a beverage from beverage preparation machine 100.

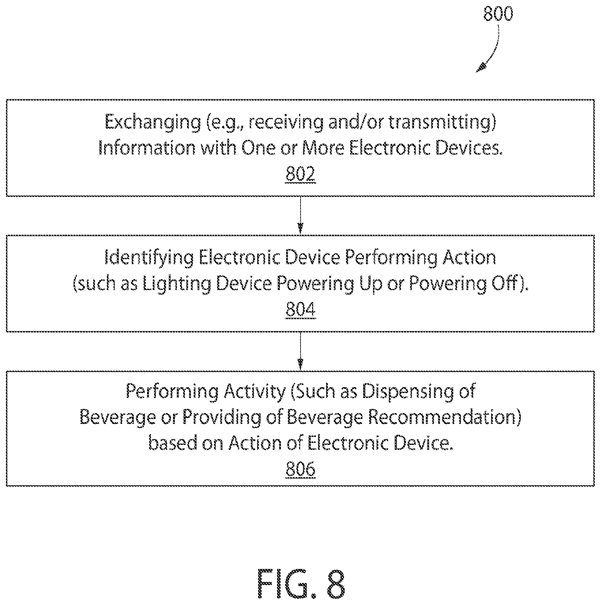

FIG. 8 shows an example process 800 in which beverage preparation machine 100 performs an activity based on an action (*e.g.,* an action by electronic device 202). At 802, beverage preparation machine 100 may exchange (*e.g.,* receive and/or transmit) information with one or more electronic devices 202. As beverage preparation machine 100 may exchange (*e.g.,* receive and/or transmit) information with one or more electronic devices 202, beverage preparation machine 100 may receive, transmit, and/or store large amounts of information. Such information may be used by beverage preparation machine 100 to predict future consumption habits of users of beverage preparation machine 100, expenses of ingredients and materials used by beverage preparation machine 100, stock of ingredients and materials used by beverage preparation machine 100, and/or locations relating to beverage preparation machine 100. The information received, transmitted, and/or stored by beverage preparation machine 100 may be used by beverage preparation machine 100 (or an external device, such as electronic device 202 and/or server) to program (*e.g.,* automatically program) an energy savings schedule.

The energy savings schedule may be related to the operation of beverage preparation machine 100. For example, beverage preparation machine 100 may use historical data of the preparation (*e.g.,* brewing) and/or dispensing of beverages by beverage preparation machine 100 to determine a future energy savings schedule. The energy savings schedule may relate to a heating up or cooling down schedule so that beverage preparation machine 100 may run at optimal energy levels during peak and/or slow beverage consumption times. Historical data of beverage preparation machine 100 may be used to provide energy savings schedules for devices (*e.g.,* electronic devices 202) other than beverage preparation machine 100. For example, beverage preparation machine 100 may determine that users begin to drink a beverage (*e.g.,* coffee) at a certain time in the morning. Beverage preparation machine 100 may communicate with light fixtures to turn on the light fixtures (*e.g.,* ensure the light fixtures are turned on) within a predetermined time prior to users drinking the beverage. In other examples, a user may typically drink a beverage prior to leaving for work or going to sleep. In such examples, beverage preparation machine 100 may communicate with light fixtures to turn off the light fixtures within a predefined time after users typically drink such beverages.

Beverage preparation machine 100 may perform a determination (*e.g.,* prediction) based on historical data. In other examples, determinations (*e.g.,* predictions) may be performed via machine learning and/or artificial intelligence approaches. For example, predictions may be performed via a machine learning model using a supervised learning approach. In such examples, beverage preparation machine 100 may store information associating locations of a beverage preparation machine and consumption levels, weather and consumption levels, thermostat temperature and consumption levels, *etc.*

Information stored by beverage preparation machine 100 may be used to train a machine learning model for providing later predictions of user consumption levels of coffee. For example, upon the machine learning model being trained using information (such as consumption information and/or refill/order information relating to beverage preparation machine 100, location information of the beverage preparation machine 100) and consumption levels, a user may input into the model a desired consumption level. Upon receiving the desired consumption level, the trained model may provide the user with one or more locations that are predicted to result in such desired consumption levels. Such results may relate to indications of past foot traffic of beverage consumers to predict future foot traffic of beverage consumers so that desired (*e.g.,* optimal) placements of beverage preparation machine 100 within a building occur and/or that relevant types of beverage preparation machines 100 are placed in desired locations within a building.

A machine learning model may be trained using user consumption information (such as user coffee preference information). Upon the machine learning model being trained using user consumption information, a user may input into the trained model an identity of a user. The user's beverage (*e.g*., coffee) preference may be based on a time of day, day of week, season, month, *etc.* For example, the user's coffee preference may include additional caffeinated coffee being consumed during mornings and Mondays. Upon receiving the identity of the user, the trained model may provide the user with a recommendation of a coffee choice, such as a more heavily caffeinated coffee during a morning. The user may manually input the information used for interacting (*e.g.,* training) the model, in some examples. In other examples the machine learning model may be trained using information automatically provided to the beverage preparation machine 100, for example, via one or more electronic devices 202.

Beverage preparation machine 100 may generate and/or print a report about the statuses of one or more of the beverage preparation machines. For example, beverage preparation machine 100 may generate and/or print reports describing faults experienced by beverage preparation machine 100, on/off periods of the beverage preparation machine 100, consumption levels of the beverage preparation machine 100, *etc.* The consumption levels may be categorized based on time of day, day of week, *etc.*

Based on the generated report, the beverage preparation machine 100 may provide recommendations to modify usage of beverage preparation machine 100. For example, at 804, beverage preparation machine 100 may identify electronic device 202 (*e.g.,* a particular electronic device) performing an action, such as a lighting device powering up or powering off. At 806, beverage preparation machine 100 may perform an activity, such as dispensing of a beverage or providing of a beverage recommendation, based on the action of electronic device 202. The recommendations may be directed to users of beverage preparation machine 100, providers of the beverage preparation machine 100, providers of ingredients and /or material used by beverage preparation machine 100, *etc.* For example, recommendations may include recommended locations (different and/or additional locations) in which beverage preparation machine 100 should be placed. The recommended locations of beverage preparation machine 100 may be to optimize consumption levels of beverages provided by beverage preparation machine 100. For example, recommended locations may be used to reduce wait times for beverages provided by beverage preparation machine 100 (*e.g.,* as lines to use beverage preparation machine 100 may be reduced or eliminated) to more efficiently use beverage preparation machine 100 (*e.g.*, before expiration of ingredients used by beverage preparation machine 100, such as due to ordering/stocking preferred used brewers), to reduce walking distances to beverage preparation machine 100, *etc.* As a result, a user of beverage preparation machine 100, an owner of a beverage preparation machine 100, and/or a supplier of ingredients/materials used by beverage preparation machine 100 may best utilize beverage preparation machine 100. For example, users, owners, and suppliers of beverage preparation machine 100 may be provided with a better return on their investment (*e.g.,* with respect to equipment and products purchased).

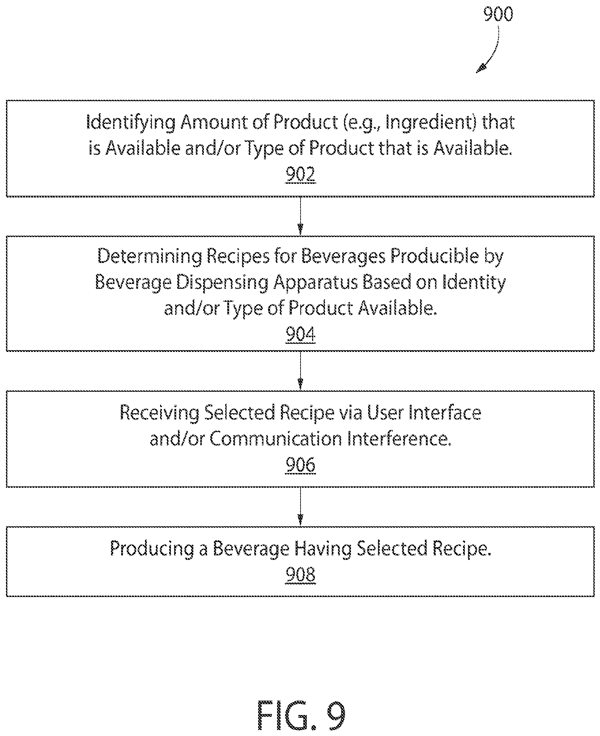

FIG. 9 shows an example process 900 in which beverage preparation machine 100 produces a selected recipe. Information regarding the amount of product (*e.g.,* ingredients, materials, *etc.*) supplied to beverage preparation machine 100, dispensed by beverage preparation machine 100, and/or remaining in the beverage preparation machine 100 may be determined and/or stored. For example, SKU information of products used by beverage preparation machine 100 may be identified and/or stored. The SKU information may be used to identify which products are being dispensed by beverage preparation machine 100 and which products are not being consumed. Beverage preparation machine 100 may determine the rate at which the products are being dispensed, for example, to determine when the products should be restocked and/or to determine that the products should not be restocked (*e.g.,* if the ingredients are not a preference of users of a particular beverage preparation machine 100 and/or if the products is well stocked by beverage preparation machine 100). Beverage preparation machine 100 may determine whether the products are in stock (and available) and when the products will become available in the beverage preparation machine 100 (*e.g.,* for example, based on estimated shipping times provided by the seller of the products).

At 902, beverage preparation machine 100 may identify an amount of a product (*e.g.,* ingredient) that is available to beverage preparation machine 100 and/or a type of a product that is available. At 904, based on the identity and/or type of the product available, beverage preparation machine 100 may determine custom recipes for beverages producible by beverage preparation machine 100. Beverage preparation machine 100 may sort the recipes that can be produced, for example, based on a popularity of the recipe or a similarity to a recipe that the user of beverage preparation machine 100 prefers. For example, the display of beverage preparation machine 100 may be updated (*e.g.,* automatically updated) with custom recipes and custom sorting of coffee brews. As an example, if beverage preparation machine 100 determines that Peppermint Tea and Hot Chocolate is a popular choice for users, the display of beverage preparation machine 100 may provide a recommendation for preparing a Peppermint Patty recipe. In other examples, beverage preparation machine 100 may make (*e.g.,* automatically make) a Peppermint Patty recipe available to users. At 906, beverage preparation machine 100 may receive a selected recipe, for example, via user interface and/or communication interference. Beverage preparation machine 100 may receive a selected recipe based on the identity and/or type of the product available. At 908, beverage preparation machine 100 may produce a beverage having the selected recipe.

Beverage preparation machine 100 may identify custom creations based on the use of beverage preparation machine 100 (*e.g.,* a particular beverage preparation machine). For example, users of beverage preparation machine 100 may create a custom creation of a chocolate and raspberry tea. The user of beverage preparation machine 100 may create the custom beverage, for example, by combining a chocolate pack and a raspberry pack. If one or more users of beverage preparation machine 100 repeat such custom combinations, beverage preparation machine 100 may determine that the custom creation is a popular beverage and may offer the custom creation for other users of beverage preparation machine 100. Beverage preparation machine 100 may provide such custom creation choice to one or more of the users of beverage preparation machine 100. In other examples, beverage preparation machine 100 may indicate that the custom creation should be offered to others besides users of beverage preparation machine 100, such as offering or marketing the custom creation to users globally.

Beverage preparation machine 100 may provide a beverage recommendation based on attributes of a beverage other than the taste of the beverage. For example, beverage preparation machine 100 may provide a beverage recommendation based on the time it takes to prepare the beverage preparation machine 100, how busy the user of beverage preparation machine 100 is determined to be (*e.g.,* based on the calendar of user), *etc.* For example, Lemon Herbal tea is brewed at a very low throughput and therefore takes some time for beverage preparation machine 100 to prepare Lemon Herbal tea. As a result of the preparation time, the choice of Lemon Herbal tea may be placed towards the end (*e.g.,* bottom) of the menu of available choices. Such features of the beverage preparation machine 100 may result in a more relevant user experience for users of beverage preparation machine 100.

Information regarding the product (*e.g.,* ingredients) to be dispensed and/or sold by beverage preparation machine 100 may be determined based on factors external to beverage preparation machine 100. For example, information regarding the product to be dispensed and/or sold by beverage preparation machine 100 may be determined based on the weather, a time of year, a time of day, *etc.* The weather may be the weather local to where beverage preparation machine 100 is located, weather predicted to occur, and/or weather that has occurred in the past. For example, beverages typically consumed during cold weather (*e.g.,* hot chocolate) may be produced by beverage preparation machine 100 when the weather is cold or predicted to be cold. Beverages typically consumed during hot weather may be produced by beverage preparation machine 100 when the weather is hot or predicted to be hot. Beverages typically consumed during a time of day (*e.g.,* the morning) may be produced by beverage preparation machine 100 during that time of day (*e.g.,* the morning), *etc.*

Beverage preparation machine 100 may display content based on the factors external to beverage preparation machine 100, such as the weather, date, time, *etc.* For example, beverage preparation machine 100 may display a bright landscape content when the weather is cloudy, on a Friday, *etc.* Beverage preparation machine 100 may provide audio content based on the factors external to beverage preparation machine 100, such as the weather, date, time, *etc.* For example, beverage preparation machine 100 may provide upbeat music when the weather is cloudy, in the afternoon, *etc.* Such content may be intended to improve a user's mood in weather, at a time (*e.g.,* in the afternoon or morning), or on a day (such as a Monday), in which the user may otherwise be expected to be in a gloomy mood or in which the user is expected to be lacking in energy.

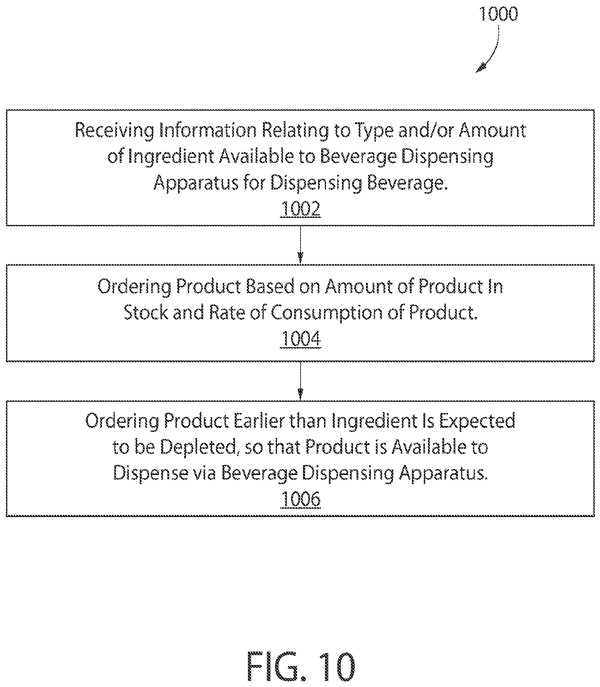

FIG. 10 shows an example process 1000 in which ingredients of beverage preparation machine 100 are reordered. Beverage preparation machine 100 may communicate with (*e.g.,* receive information from) one or more marketplaces (*e.g.,* online marketplaces) and information systems. At 1002, beverage preparation machine 100 may receive information relating to a type and/or amount of ingredient available to beverage preparation machine 100 for dispensing a beverage. Beverage preparation machine 100 may receive the information via user interface and/or communication interface of beverage preparation machine 100. For example, a user may provide information relating to a type and/or ingredient available to beverage preparation machine 100 via user interface and/or via electronic device. Beverage preparation machine 100 may receive ingredient information via an external tag associated with the ingredient, such as an RFID tag. The external tag may communicate the presence and/or type of the ingredient to beverage preparation machine 100.

Beverage preparation machine 100 may communicate with an online marketplace via the Internet to re-order product. The product may be ingredients of recipes to be dispensed by beverage preparation machine 100 or other material (*e.g.,* cups, straws, *etc.*) used by beverage preparation machine 100. Beverage preparation machine 100 may determine to communicate with an online marketplace to re-order product (*e.g.,* coffee product) based on the marketplace that one or more (*e.g.,* each) users desire to order from (*e.g*. through a particular distributor), based on a pre-existing relationship with the user, based on a price (*e.g.,* the lowest price for the product), based on a rating of the marketplace, *etc.*

At 1004, beverage preparation machine 100 may order product based on the amount of product in stock and the rate of consumption of the product. For example, beverage preparation machine 100 may determine the amount of ingredients available to beverage preparation machine 100 and the typical consumption of the ingredient so that the ingredient is ordered and delivered to beverage preparation machine 100 before the ingredient is out of stock. For example, at 1006, beverage preparation machine 100 may order the product earlier than the ingredient is expected to be depleted, so that the product is always available to be dispensed via beverage preparation machine 100. For example, as shown in FIG. 3, a user 370 may stock beverage preparation machine 100 with product, indicate the amount of product available to the beverage preparation machine 100, *etc.* Upon consumption of the product, beverage preparation machine 100 may determine the product remaining and/or predict when the product will be depleted. Beverage preparation machine 100 may order additional product so that the product arrives before it is depleted. In some examples beverage preparation machine 100 may incorporate average delivery times so that the product is received before it is completely depleted. Such features may result in ease of ordering product for users of the beverage preparation machine 100 and/or ease of processing orders for distributors.

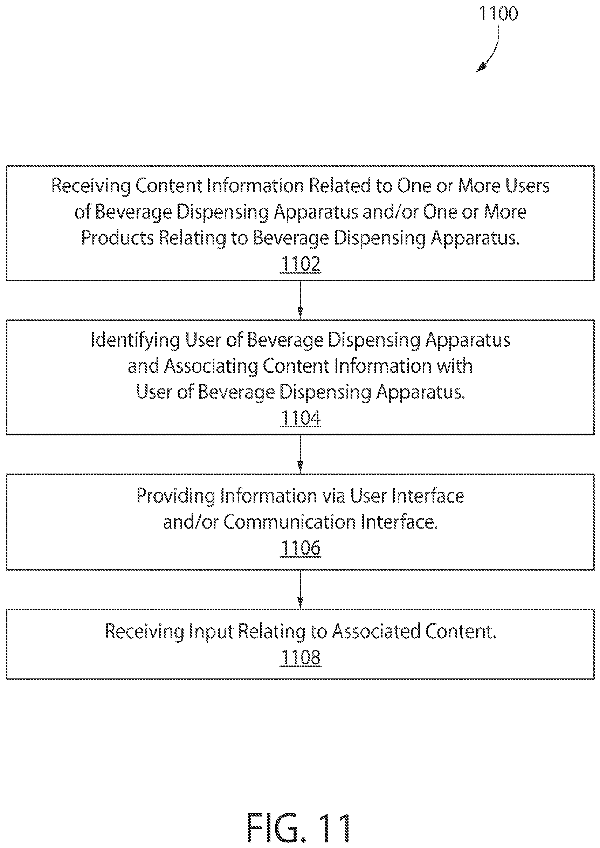

FIG. 11 shows an example process 1100 of beverage preparation machine 100 providing information (*e.g.,* information provided as audio content, video content, textual content). Information (*e.g.,* content) may be stored on beverage preparation machine 100, received by beverage preparation machine 100, displayed by beverage preparation machine 100, transmitted from beverage preparation machine 100, *etc.* The content to be stored, received, displayed, and/or transmitted may be determined via a rule. For example, the content may be determined by a rule using one or more parameters, such as the time of day, the beverage being dispensed (*e.g.,* vended), beverages that are not dispensed, beverages that are frequently or infrequently dispensed, and the like. The rules may be priority based (*e.g.,* ranked). For example, the content may be prioritized according to a time of day and a beverage to be dispensed. Using this example, priority '1' may include content 'A' being displayed when time is between 2 p.m. and 4 p.m. and tea is being dispensed; priority '2' may include content 'B' being displayed when time is between 2 p.m. and 5 p.m. and hot chocolate is being dispensed; priority '3' may include content 'C' being displayed when time is between 2 p.m. and 5 p.m. and any drink is being dispensed; priority '4' may include content 'D' being displayed when time is between 9 a.m. and 6 p.m. and any drink is being dispensed; and priority '5' may include content 'E' being displayed when beverage preparation machine 100 has a status of idle and beverage preparation machine 100 is in power save mode.

Content may be created and/or provided by manufacturer of beverage preparation machine 100, distributor of beverage preparation machine 100, user of beverage preparation machine 100, a source not affiliated with manufacturer of beverage preparation machine 100, *etc.* At 1102, beverage preparation machine 100 may receive content information related to one or more users of beverage preparation machine 100 and/or one or more products relating to beverage preparation machine 100. Content may be received by and/or transmitted from beverage preparation machine 100 via wired and/or wireless communication methods. Content may be displayed by beverage preparation machine 100 via a display, for example. Audio may be provided by the beverage preparation machine 100 via one or more speakers, such as speakers 190. The speakers may be internal to the beverage preparation machine 100 and/or the speakers may be external to the beverage preparation machine 100. For example, the beverage preparation machine 100 may provide audio information to an external speaker that may provide the sound of the audio.

At 1104, beverage preparation machine 100 may identify a user of beverage preparation machine 100 and may associate content information with the user of beverage preparation machine 100. The content stored on, received by, and/or transmitted from beverage preparation machine 100 may enable beverage preparation machine 100 to function as an information area, such as a central notice board. Users may physically and/or remotely visit the beverage preparation machine 100 to receive content stored and/or provided by beverage preparation machine 100. At 1106, beverage preparation machine 100 may provide information via user interface and/or communication interface. For example, beverage preparation machine 100 may provide information (*e.g.,* visual information, audio information) relating to work (such as information relating to the hiring of a new employee) and/or information relating to brewer dispensers. For example, beverage preparation machine 100 may provide information relating to a product launch of a beverage preparation machine, information on using beverage preparation machine 100, favorite recipes that can be used with beverage preparation machine 100, *etc.*

Users may physically visit the beverage preparation machine 100 (*e.g.,* when receiving a beverage) and/or users may remotely log-in to the central notice board of the beverage preparation machine 100. Remote information may be accessed by users that are physically located within the building in which beverage preparation machine 100 is located and/or users that are remote (such as users working remotely) from beverage preparation machine 100. Users may select how much information they desire to receive, the type of information they desire to receive, *etc.* Beverage preparation machine 100 may provide notifications (*e.g.,* push notifications) to users, based on user selections.

At 1108, beverage preparation machine 100 may receive input relating to content (*e.g.,* associated content), such as feedback. For example, users of beverage preparation machine 100 may provide feedback of beverage preparation machine 100 to beverage preparation machine 100. The feedback may be provided by physically interacting with beverage preparation machine 100 and/or by remotely interacting with beverage preparation machine 100. For example, while beverage preparation machine 100 is preparing a beverage for user, beverage preparation machine 100 may request that user provide feedback of beverage preparation machine 100. Such feedback may be ease of use of beverage preparation machine 100, improvements that user believes would benefit beverage preparation machine 100, how satisfied user is with beverage preparation machine 100, and the like.

Content may be sent to beverage preparation machine 100, for example, via a content management application. Content may be sent from beverage preparation machine 100 to one or more electronic devices 202. Content may be sent to the electronic devices 202 when the user of electronic device 202 is proximate to beverage preparation machine 100 and/or when the user is remote from beverage preparation machine 100. As described herein, the content provided by beverage preparation machine 100 may permit a user, owner, and/or technician of beverage preparation machine 100 to provide feedback. For example, users may suggest categories of content that the users, owners, and/or technician may add or request to be added. The users, owners, and/or technician may provide indications of whether they enjoy the content provided by the beverage preparation machine 100, or if there are other types of content that beverage preparation machine 100 should provide. Beverage preparation machine 100 may update the content provided, for example, based on user preferences. In other examples, content may be based on the beverage (*e.g.,* coffee) chosen, coffee pack type, SKU provided, *etc.* For example, beverage preparation machine 100 may determine that consumers of a certain beverage have similar interests. Based on the beverage consumed by the users, the content may be dynamically and intelligently (*e*.*g*., automatically) updated. As a result, beverage preparation machine 100 may provide similar content to those who consume similar beverages.

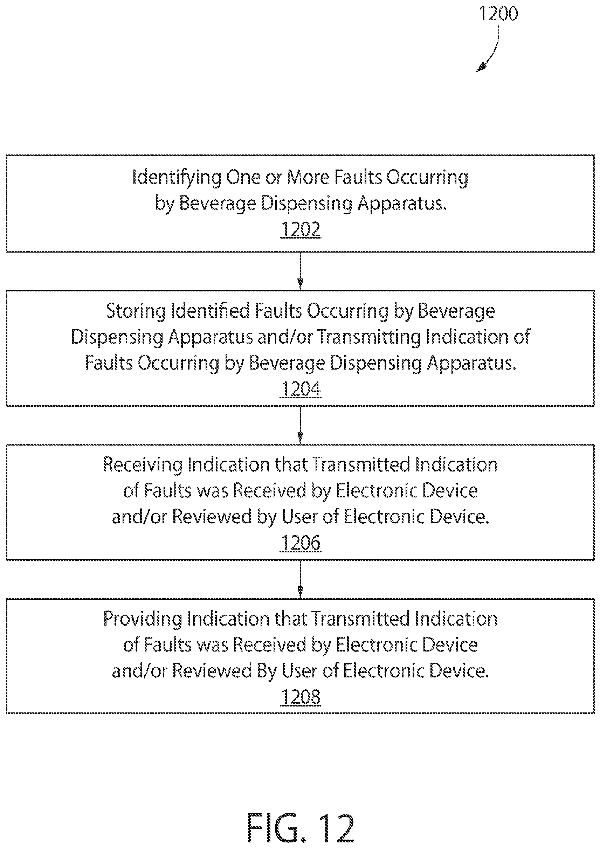

FIG. 12 shows an example process 1200 of case managing of beverage preparation machine 100. At 1202, beverage preparation machine 100 may identify one or more faults occurring by beverage preparation machine 100. The faults may be a need to repair the beverage preparation machine 100 immediately and/or in the future. The faults may be tracked. For example, beverage preparation machine 100 may track one or more faults of beverage preparation machine 100 and/or faults may be tracked external to beverage preparation machine 100, such as via a server or other electronic device. The response time, such as the time from which a fault occurs and the time to resolve the fault, may be calculated and/or tracked. The response time may be calculated and/or tracked by beverage preparation machine 100 or external to beverage preparation machine 100, as described herein. The faults may be cleared. For example, when a fault is resolved (*e.g.,* completely resolved and/or partially resolved) the fault may be cleared. The fault may be cleared via user interface (*e.g.,* soft/hard buttons found on beverage preparation machine 100) and/or the faults may be cleared remotely, such as via an electronic device (*e.g.,* an electronic device of a technician) communicating with beverage preparation machine 100.

Faults may be categorized. For example, the faults may be categorized as a soft fault or as a hard fault. The soft faults may be less severe than a hard fault. For example, a soft fault may be an indication that beverage preparation machine 100 needs to be maintained (*e.g.,* cleaned, such as cleaned around the outlet of beverage preparation machine 100). A soft fault may be indicated by a user of beverage preparation machine 100. A hard fault may be an indication that beverage preparation machine 100 is not in proper working order, such as beverage preparation machine 100 needing a repair and/or a reset. A hard fault may be generated and/or detected by beverage preparation machine 100. Beverage preparation machine 100 may determine (*e.g.,* automatically) determine the presence of a hard fault and/or a resolution of a hard fault.

At 1204, beverage preparation machine 100 may store faults occurring by beverage preparation machine 100 and/or transmit (*e.g.,* transmit to a mobile device and/or a server) an indication of faults occurring by beverage preparation machine 100. At 1206, beverage preparation machine 100 may receive an indication that the transmitted indication of faults was received by an electronic device and/or reviewed by a user of the electronic device. At 1208, beverage preparation machine 100 may provide (*e.g.,* via a user interface) an indication that the transmitted indication of faults was received by an electronic device and/or reviewed by a user of the electronic device.

As provided herein, beverage preparation machine 100 may provide and/or store information relating to the use, maintenance, fault, and/or inventory of beverage preparation machine 100. For example, beverage preparation machine 100 may provide and/or store the need to repair beverage preparation machine 100. Such information may relate to fault data of beverage preparation machine 100. The use, maintenance, fault, and/or inventory information may be provided to a technician. The technician may receive the information *(e.g.,* fault data) remotely *(e.g.,* via the Internet), via a display of the beverage preparation machine 100, and/or via a wired connection to the beverage preparation machine 100. The fault data may provide codes that identify the faults. For example, a code may identify that the door of the beverage preparation machine 100 is open, a code may identify that one or more parts of beverage preparation machine 100 requires repair, a code may identify that beverage preparation machine 100 is due for a regular maintenance, a code may identify that the product housed by the beverage preparation machine 100 is old or expired, *etc.*

Providing the information (*e.g.,* fault data) described herein may maximize the amount of time that beverage preparation machine 100 may be in working order. The information may be provided to the user, owner, and/or technician via alerts. For example, by beverage preparation machine 100 being maintained (as a result of beverage preparation machine 100 providing a maintenance indication), beverage preparation machine 100 may spend less time broken. Further, by providing information relating to faults of beverage preparation machine 100, the repair time of beverage preparation machine 100 may be shortened. As the information may be provided to the user of beverage preparation machine 100 and/or a technician of beverage preparation machine 100, it can be determined the best way to repair beverage preparation machine 100. For example, if the repair is minor, the user may be able to repair beverage preparation machine 100. Alternatively, if the repair is major, a technician may be notified. Beverage preparation machine 100 may determine which party (*e.g.,* user or technician) is best suited to perform the repair.

The history of the use, repair, and/or maintenance of one or more beverage preparation machines 100 may be stored. The information may be stored in beverage preparation machine 100 and/or in another device, such as via server 250. Based on this information, it may be determined the working order of a particular beverage preparation machine and/or the working order of a line of beverage preparation machines. Based on this information, it may be determined whether a particular beverage preparation machine 100 should be retired, whether an entire line of beverage preparation machines 100 should be discontinued. *etc.* Alternatively, it may be determined that the beverage preparation machine 100 is a high performer (*e.g.,* that requires little or no repair). This information may be used so that features of the best performing devices may be utilized in lower performing devices.

As provided herein, by providing information relating to beverage preparation machine 100 to the technician repairing the beverage preparation machine 100, the process of repairing and/or maintaining beverage preparation machine 100 may be optimized. In the example in which a technician is needed for servicing beverage preparation machine 100, the service may be requested (*e.g.,* requested remotely, via SMS, email, phone call, *etc.)* for the beverage preparation machine 100. The repair may be ticketed to an available technician and/or supplier and the ticket for the repair may be routed (*e.g*., automatically routed) to the office manager, technician, specified department of a distributor, *etc.* Such features may result in less downtime of beverage preparation machine 100.

Beverage preparation machine 100 may be rebooted via touch buttons of the beverage preparation machine 100 and/or via a signal received by communication interface. Beverage preparation machine 100 may be controlled remotely. For example, beverage preparation machine 100 may be controlled by a user and/or technician remotely. By remotely controlling beverage preparation machine 100, a technician may be able to remotely perform diagnostic processes on beverage preparation machine 100 to troubleshoot and correct issues with beverage preparation machine 100. For example, a technician may remotely reboot beverage preparation machine 100. Beverage preparation machine 100 may be rebooted to correct one or more faults, to install software (including firmware) updates, to refresh the memory, *etc.* Beverage preparation machine 100 may be rebooted via a web-based portal and/or a mobile application. The rebooting of beverage preparation machine 100 may be restricted, for example, so that an administrator (*e.g.,* only an administer) may reboot the beverage preparation machine 100.

Software and/or settings (*e.g.,* configuration settings) of a beverage preparation machine 100 may be copied (*e.g.,* cloned) from one beverage preparation machine 100 to another beverage preparation machine 100. For example, software and/or settings of a beverage preparation machine 100 may be copied from a first beverage preparation machine to a second beverage preparation machine at installation time of the second beverage preparation machine 100 and/or after the second beverage preparation machine 100 has been installed. The copied settings may include one or more pieces of data, as described herein. For example, copied settings may include users' favorite beverages, typical times of beverage consumption, user calendar information, *etc.* In other examples the copied settings may be configuration information of beverage preparation machine 100. Configuration information may include one or more of passwords of users of beverage preparation machine 100; drink SKUs available in beverage preparation machine 100; drink settings for each SKU; required energy save settings; payment settings; price settings for each SKU; clock settings; contact details (such as contact information to use in event of machine problems); audit information; error logs; activity logs; and timed events (such as times/dates in which a filter should be changed, discount drink times, *etc*.). The settings may be copied via wired and/or wireless methods. For example, an administrator may remotely copy settings from the first beverage preparation machine 100 to the second beverage preparation machine 100.

While the inventions have been described with respect to specific examples including presently preferred modes of carrying out the inventions, those skilled in the art will appreciate that there are numerous variations and permutations of the above described systems and techniques. It is to be understood that other embodiments may be utilized and structural and functional modifications may be made without departing from the scope of the present inventions. Thus, the spirit and scope of the inventions should be construed broadly as set forth in the appended claims.

### EXEMPLARY CLAIM SET

Exemplary claim 1. A beverage preparation machine comprising: a container compartment for receiving a beverage packet comprising beverage ingredients; an outlet for dispensing a beverage flavored by the beverage packet; a communication interface configured to receive a wireless signal from an electronic device, the wireless signal comprising an identifier of the electronic device; and a processor operably coupled to the communication interface and configured to: receive the identifier of the electronic device; associate the identifier of the electronic device with a user and a beverage preference of the user; and cause the beverage dispensed by the outlet to be based on the beverage preference of the user.

Exemplary claim 2. The beverage preparation machine of Exemplary claim 1 wherein the communication interface is configured to automatically receive the wireless signal from the electronic device upon determining that the electronic device is proximate to the beverage preparation machine.

Exemplary claim 3. The beverage preparation machine of any of the preceding Exemplary claims wherein the wireless signal of the electronic device is a Bluetooth or Bluetooth low energy Bluetooth signal.

Exemplary claim 4. The beverage preparation machine of any of the preceding Exemplary claims wherein: the processor is configured to: determine a beverage recommendation based on the beverage preference of the user, the beverage recommendation being different than the beverage preference; and cause the communication interface to send a display signal to the electronic device, the display signal causing the electronic device to display the beverage recommendation.

Exemplary claim 5. The beverage preparation machine of any of the preceding Exemplary claims wherein the beverage preference of the user is based on at least one of a time of day, a time of year, a schedule of the user, a preference of co-workers of the user, or a trend of beverages.

Exemplary claim 6. The beverage preparation machine of any of the preceding Exemplary claims wherein the beverage preference of the user is based on a history of beverages dispensed for the user or a profile created by the user.

Exemplary claim 7. The beverage preparation machine of any of the preceding Exemplary claims comprising a user interface configured to receive biometric information associated with the user, wherein the processor is configured to associate the biometric information associated with the user with the beverage preference of the user.

Exemplary claim 8. The beverage preparation machine of Exemplary claim 7 wherein the biometric information comprises a fingerprint of the user, an image of the user, or a voice of the user.

Exemplary claim 9. A beverage preparation system comprising: a container compartment for receiving a beverage packet comprising beverage ingredients; an outlet for dispensing a beverage flavored by the beverage packet; a communication interface configured to receive a wireless signal from an electronic device, the wireless signal comprising an identifier of the electronic device; and a processor operably coupled to the communication interface and configured to: receive the identifier of the electronic device; associate the identifier of the electronic device with a user and a beverage preference of the user; and cause the beverage dispensed by the outlet to be based on the beverage preference of the user.

Exemplary claim 10. The beverage preparation system of Exemplary claim 9 wherein the communication interface is configured to automatically receive the wireless signal from the electronic device upon determining that the electronic device is proximate to the beverage preparation machine.

Exemplary claim 11. The beverage preparation system of any of the Exemplary claims 9-10 wherein the wireless signal of the electronic device is a Bluetooth or Bluetooth low energy Bluetooth signal.

Exemplary claim 12. The beverage preparation system of any of the Exemplary claims 9-11 wherein: the processor is configured to: determine a beverage recommendation based on the beverage preference of the user, the beverage recommendation being different than the beverage preference; and cause the communication interface to send a display signal to the electronic device, the display signal causing the electronic device to display the beverage recommendation.

Exemplary claim 13. The beverage preparation system of any of the Exemplary claims 9-12 wherein the beverage preference of the user is based on at least one of a time of day, a time of year, a schedule of the user, a preference of co-workers of the user, or a trend of beverages.

Exemplary claim 14. The beverage preparation system of any of the Exemplary claims 9-13 wherein the beverage preference of the user is based on a history of beverages dispensed for the user or a profile created by the user.

Exemplary claim 15. The beverage preparation system of any of the Exemplary claims 9-14 comprising a user interface configured to receive biometric information associated with the user, wherein the processor is configured to associate the biometric information associated with the user with the beverage preference of the user.

Exemplary claim 16. The beverage preparation system of Exemplary claim 15 wherein the biometric information comprises a fingerprint of the user, an image of the user, or a voice of the user.

Exemplary claim 17. A method of dispensing a beverage comprising: receiving a beverage packet comprising beverage ingredients; receiving a wireless signal from an electronic device, the wireless signal comprising an identifier of the electronic device; and associating, via a processor, the identifier of the electronic device with a user and a beverage preference of the user; and dispensing a beverage flavored by the beverage packet, wherein the beverage dispensed is based on the beverage preference of the user.

Exemplary claim 18. The method of Exemplary claim 17 comprising automatically receiving the wireless signal from the electronic device upon determining that the electronic device is proximate to the beverage preparation machine.

Exemplary claim 19. The method of any of the Exemplary claims 17-18 wherein the wireless signal of the electronic device is a Bluetooth or Bluetooth low energy Bluetooth signal.

Exemplary claim 20. The method of any of the Exemplary claims 17-19 comprising: determining, via the processor, a beverage recommendation based on the beverage preference of the user, the beverage recommendation being different than the beverage preference; and sending a display signal to the electronic device, the display signal causing the electronic device to display the beverage recommendation.

Exemplary claim 21. The method of any of the Exemplary claims 17-20 wherein the beverage preference of the user is based on at least one of a time of day, a time of year, a schedule of the user, a preference of co-workers of the user, or a trend of beverages.

Exemplary claim 22. The method of any of the Exemplary claims 17-21 wherein the beverage preference of the user is based on a history of beverages dispensed for the user or a profile created by the user.

Exemplary claim 23. The method of any of the Exemplary claims 17-22 comprising: receiving biometric information associated with the user; and associating the biometric information associated with the user with the beverage preference of the user.

Exemplary claim 24. The method of Exemplary claim 23 wherein the biometric information comprises a fingerprint of the user, an image of the user, or a voice of the user.

Exemplary claim 25. A beverage preparation machine comprising: a container compartment configured to receive a beverage packet comprising beverage ingredients; an outlet for dispensing a beverage flavored by the beverage packet; an interface configured to: receive a beverage selection from a user; and receive an identifier of the user; a processor operably coupled to the interface and configured to: associate the identifier of the user with a beverage preference of the user; and cause the beverage dispensed by the outlet to be based on the beverage preference of the user.

Exemplary claim 26. The beverage preparation machine of Exemplary claim 25 wherein the interface is a user interface comprising selection buttons for receiving the beverage selection from the user.

Exemplary claim 27. The beverage preparation machine of Exemplary claim 26 wherein the identifier of the user is determined based on biometric information of the user that is received by the user interface.

Exemplary claim 28. The beverage preparation machine of Exemplary claim 27 wherein the biometric information comprises a fingerprint of the user, an image of the user, or an optical scan of the user.

Exemplary claim 29. The beverage preparation machine of any of the Exemplary claims 25-28 wherein the identifier of the user is determined based on a received signal from an electronic device of the user.

Exemplary claim 30. The beverage preparation machine of any of the Exemplary claims 25-29 wherein the processor is configured to determine a beverage recommendation based on the beverage preference, the beverage recommendation being different from the beverage preference.

Exemplary claim 31. The beverage preparation machine of any of the Exemplary claims 25-230 wherein the interface is configured to display the beverage recommendation.

Exemplary claim 32. The beverage preparation machine of any of the Exemplary claims 25-31 wherein the beverage preference of the user is based on at least one of a time of day, a time of year, a schedule of the user, a preference of co-workers of the user, or a trend of beverages.

Exemplary claim 33. A beverage preparation system comprising: a container compartment configured to receive a beverage packet comprising beverage ingredients; an outlet for dispensing a beverage flavored by the beverage packet; an interface configured to: receive a beverage selection from a user; and receive an identifier of the user; a processor operably coupled to the interface and configured to: associate the identifier of the user with a beverage preference of the user; and cause the beverage dispensed by the outlet to be based on the beverage preference of the user.

Exemplary claim 34. The beverage preparation system of Exemplary claim 33 wherein the interface is a user interface comprising selection buttons for receiving the beverage selection from the user.

Exemplary claim 35. The beverage preparation system of Exemplary claim 34 wherein the identifier of the user is determined based on biometric information of the user that is received by the user interface.

Exemplary claim 36. The beverage preparation system of Exemplary claim 35 wherein the biometric information comprises a fingerprint of the user, an image of the user, or an optical scan of the user.

Exemplary claim 37. The beverage preparation system of any of the Exemplary claims 33-36 wherein the identifier of the user is determined based on a received signal from an electronic device of the user.

Exemplary claim 38. The beverage preparation system of any of the Exemplary claims 33-37 wherein the processor is configured to determine a beverage recommendation based on the beverage preference, the beverage recommendation being different from the beverage preference.

Exemplary claim 39. The beverage preparation system of any of the Exemplary claims 33-38 wherein the interface is configured to display the beverage recommendation.

Exemplary claim 40. The beverage preparation system of any of the Exemplary claims 33-39 wherein the beverage preference of the user is based on at least one of a time of day, a time of year, a schedule of the user, a preference of co-workers of the user, or a trend of beverages.

Exemplary claim 41. A beverage preparation machine comprising: a container compartment for receiving a beverage packet comprising beverage ingredients; an outlet for dispensing a beverage flavored by the beverage packet; a surface for receiving a vessel configured to receive the beverage; a processor configured to: determine an interior volume of the vessel; determine an amount of the beverage that the vessel can hold based on the interior volume of the vessel; and cause the outlet to dispense, into the vessel, an amount of the beverage that is less than the determined amount of the beverage that the vessel can hold.

Exemplary claim 42. The beverage preparation machine of Exemplary claim 41 comprising at least one of an image capturing device or a light emitting and receiving device providing information to the processor, the processor determining the interior volume of the vessel based on the information provided by the image capturing device or the light emitting and receiving device.

Exemplary claim 43. The beverage preparation machine of any of Exemplary claims 41-42, further comprising an interface configured to receive an amount of beverage preferred by a user; wherein the processor is configured to: determine if the amount of the beverage preferred by the user is less than or equal to the determined amount of the beverage that the vessel can hold; and dispense the amount of the beverage preferred by the user if the amount of the beverage preferred by the user is less than or equal to the determined amount of the beverage that the vessel can hold, otherwise dispense the amount of the beverage that the vessel can hold.

Exemplary claim 44. The beverage preparation machine of any of Exemplary claims 41-43, wherein the interface is a communication interface receiving the amount of the beverage preferred by the user via an electronic device.

Exemplary claim 45. The beverage preparation machine of Exemplary claim 44 wherein the electronic device is at least one of a mobile phone, an Internet of Things device, or a server.

Exemplary claim 46. The beverage preparation machine of any of Exemplary claims 41-43 wherein the interface is a user interface receiving the amount of the beverage preferred by the user via buttons provided on the beverage preparation machine.

Exemplary claim 47. The beverage preparation machine of any of Exemplary claims 41-46 wherein the processor is configured to determine a length, width, and height of the interior of the vessel, the processor determining the interior volume of the vessel based on the determined length, width, and height of the interior of the vessel.

Exemplary claim 48. The beverage preparation machine of any of Exemplary claims 41-47wherein the processor causes the outlet to automatically dispense, into the vessel, the amount of the beverage that is less than the determined amount of the beverage that the vessel can hold when the surface receives the vessel.

Exemplary claim 49. A beverage preparation system comprising: a container compartment for receiving a beverage packet comprising beverage ingredients; an outlet for dispensing a beverage flavored by the beverage packet; a surface for receiving a vessel configured to receive the beverage; a processor configured to: determine an interior volume of the vessel; determine an amount of the beverage that the vessel can hold based on the interior volume of the vessel; and cause the outlet to dispense, into the vessel, an amount of the beverage that is less than the determined amount of the beverage that the vessel can hold.

Exemplary claim 50. The beverage preparation system of Exemplary claim 49 comprising at least one of an image capturing device or a light emitting and receiving device providing information to the processor, the processor determining the interior volume of the vessel based on the information provided by the image capturing device or the light emitting and receiving device.

Exemplary claim 51. The beverage preparation system of any of Exemplary claims 49-50, further comprising an interface configured to receive an amount of beverage preferred by a user; wherein the processor is configured to: determine if the amount of the beverage preferred by the user is less than or equal to the determined amount of the beverage that the vessel can hold; and dispense the amount of the beverage preferred by the user if the amount of the beverage preferred by the user is less than or equal to the determined amount of the beverage that the vessel can hold, otherwise dispense the amount of the beverage that the vessel can hold.

Exemplary claim 52. The beverage preparation system of any of Exemplary claims 49-51, wherein the interface is a communication interface receiving the amount of the beverage preferred by the user via an electronic device.

Exemplary claim 53. The beverage preparation system of Exemplary claim 52 wherein the electronic device is at least one of a mobile phone, an Internet of Things device, or a server.

Exemplary claim 54. The beverage preparation system of any of Exemplary claims 49-51 wherein the interface is a user interface receiving the amount of the beverage preferred by the user via buttons provided on the beverage preparation machine.

Exemplary claim 55. The beverage preparation system of any of Exemplary claims 49-54 wherein the processor is configured to determine a length, width, and height of the interior of the vessel, the processor determining the interior volume of the vessel based on the determined length, width, and height of the interior of the vessel.

Exemplary claim 56. The beverage preparation system of any of Exemplary claims 49-55 wherein the processor causes the outlet to automatically dispense, into the vessel, the amount of the beverage that is less than the determined amount of the beverage that the vessel can hold when the surface receives the vessel.

Exemplary claim 57. A method of dispensing a beverage comprising: receiving a beverage packet comprising beverage ingredients; receiving a vessel configured to receive a beverage; determining, via a processor, an interior volume of the vessel; determining an amount of the beverage that the vessel can hold based on the interior volume of the vessel; and causing an outlet to dispense, into the vessel, an amount of the beverage that is less than the determined amount of the beverage that the vessel can hold, the beverage being flavored by the beverage packet.

Exemplary claim 58. The method of Exemplary claim 57 comprising: providing information via an image capturing device or a light emitting and receiving device; and determining, via the processor, the interior volume of the vessel based on the information provided by the image capturing device or the light emitting and receiving device.

Exemplary claim 59. The method of any of Exemplary claims 57-58, comprising: receiving an amount of beverage preferred by a user; determining, via the processor, if the amount of the beverage preferred by the user is less than or equal to the determined amount of the beverage that the vessel can hold; and dispensing the amount of the beverage preferred by the user if the amount of the beverage preferred by the user is less than or equal to the determined amount of the beverage that the vessel can hold, otherwise dispense the amount of the beverage that the vessel can hold.

Exemplary claim 60. The method of any of Exemplary claims 57-59 comprising receiving the amount of the beverage preferred by the user via an electronic device.

Exemplary claim 61. The method of Exemplary claim 60 wherein the electronic device is at least one of a mobile phone, an Internet of Things device, or a server.

Exemplary claim 62. The method of any of Exemplary claims 57-58 comprising receiving the amount of the beverage preferred by the user via buttons provided on the beverage preparation machine.

Exemplary claim 63. The method of any of Exemplary claims 57-62 comprising: determining a length, width, and height of the interior of the vessel; and determining the interior volume of the vessel based on the determined length, width, and height of the interior of the vessel.

Exemplary claim 64. The method of any of Exemplary claims 57-58 comprising automatically dispensing, into the vessel, the amount of the beverage that is less than the determined amount of the beverage that the vessel can hold when the surface receives the vessel.

Exemplary claim 65. A beverage preparation machine comprising: a container compartment for receiving a beverage packet comprising beverage ingredients; an outlet for dispensing a beverage flavored by the beverage packet; a communication interface configured to receive a wireless communication from an electronic device, the wireless communication comprising information relating to the beverage preparation machine or a user of the beverage preparation machine; and a user interface configured to display the information relating to the beverage preparation machine or the user of the beverage preparation machine.

Exemplary claim 66. The beverage preparation machine of Exemplary claim 65 wherein the user interface is configured to display a beverage recommendation based on a temperature local to the beverage preparation machine, a day of a week, or a time of a day.

Exemplary claim 67. The beverage preparation machine of any of Exemplary claims 65-66 wherein the user of the beverage preparation machine is identified via a unique identifier of a mobile device of the user of the beverage preparation device, the mobile device being different than the electronic device.

Exemplary claim 68. The beverage preparation machine of any of Exemplary claims 65-67, wherein the user interface is configured to display the information relating to the beverage preparation machine or the user of the beverage preparation machine based on a preference of the user of the beverage preparation machine.

Exemplary claim 69. The beverage preparation machine of any of Exemplary claims 65-68, wherein the user selects a type of the information displayed by the user interface or a frequency of the information displayed by the user interface.

Exemplary claim 70. The beverage preparation machine of any of Exemplary claims 65-69, wherein the electronic device is a server, a user device, or an Internet of Things device.

Exemplary claim 71. The beverage preparation machine of any of Exemplary claims 65-70, wherein the information relating to the beverage preparation machine comprises at least one of popular beverages that can be dispensed by beverage preparation machine or a history of beverages dispensed by beverage preparation machine.

Exemplary claim 72. The beverage preparation machine of any of Exemplary claims 65-71, wherein the information relating to the beverage preparation machine comprises temperature information local to the beverage preparation machine or sports information local to the beverage preparation machine.

Exemplary claim 73. The beverage preparation machine of any of Exemplary claims 65-72, wherein the wireless communication received from the communication interface comprises at least one of stock information or breaking news information.

Exemplary claim 74. The beverage preparation machine of any of Exemplary claims 65-73, wherein the communication interface is configured to send, to a mobile device of the user, the information relating to the beverage preparation machine or the user of the beverage preparation machine.

Exemplary claim 75. A beverage preparation system comprising: a container compartment for receiving a beverage packet comprising beverage ingredients; an outlet for dispensing a beverage flavored by the beverage packet; a communication interface configured to receive a wireless communication from an electronic device, the wireless communication comprising information relating to a beverage preparation machine or a user of the beverage preparation machine; and a user interface configured to display the information relating to the beverage preparation machine or the user of the beverage preparation machine.

Exemplary claim 76. The beverage preparation system of Exemplary claim 75 wherein the user interface is configured to display a beverage recommendation based on a temperature local to the beverage preparation machine, a day of a week, or a time of a day.

Exemplary claim 77. The beverage preparation system of any of Exemplary claims 75-76 wherein the user of the beverage preparation machine is identified via a unique identifier of a mobile device of the user of the beverage preparation device, the mobile device being different than the electronic device.

Exemplary claim 78. The beverage preparation system of any of Exemplary claims 75-77, wherein the user interface is configured to display the information relating to the beverage preparation machine or the user of the beverage preparation machine based on a preference of the user of the beverage preparation machine.

Exemplary claim 79. The beverage preparation system of any of Exemplary claims 75-78, wherein the user selects a type of the information displayed by the user interface or a frequency of the information displayed by the user interface.

Exemplary claim 80. The beverage preparation system of any of Exemplary claims 75-79, wherein the electronic device is a server, a user device, or an Internet of Things device.

Exemplary claim 81. The beverage preparation system of any of Exemplary claims 75-80, wherein the information relating to the beverage preparation machine comprises at least one of popular beverages that can be dispensed by beverage preparation machine or a history of beverages dispensed by beverage preparation machine.

Exemplary claim 82. The beverage preparation system of any of Exemplary claims 75-81, wherein the information relating to the beverage preparation machine comprises temperature information local to the beverage preparation machine or sports information local to the beverage preparation machine.

Exemplary claim 83. The beverage preparation system of any of Exemplary claims 75-82, wherein the wireless communication received from the communication interface comprises at least one of stock information or breaking news information.

Exemplary claim 84. The beverage preparation system of any of Exemplary claims 75-83, wherein the communication interface is configured to send, to a mobile device of the user, the information relating to the beverage preparation machine or the user of the beverage preparation machine.

Exemplary claim 85. A method for providing information via a beverage preparation machine comprising: receiving a beverage packet comprising beverage ingredients; receiving a wireless communication from an electronic device, the wireless communication comprising information relating to the beverage preparation machine or a user of the beverage preparation machine; displaying, via a display, the information relating to the beverage preparation machine or the user of the beverage preparation machine; and dispensing a beverage flavored by the beverage packet.

Exemplary claim 86. The method of Exemplary claim 85 comprising displaying a beverage recommendation based on a temperature local to the beverage preparation machine, a day of a week, or a time of a day.

Exemplary claim 87. The method of any of Exemplary claims 85-86 wherein the user of the beverage preparation machine is identified via a unique identifier of a mobile device of the user of the beverage preparation device, the mobile device being different than the electronic device.

Exemplary claim 88. The method of any of Exemplary claims 85-87 comprising displaying the information relating to the beverage preparation machine or the user of the beverage preparation machine based on a preference of the user of the beverage preparation machine.

Exemplary claim 89. The method of any of Exemplary claims 85-88, comprising selecting, via a user, a type of the information displayed by the user interface or a frequency of the information displayed by the user interface.

Exemplary claim 90. The method of any of Exemplary claims 85-89, wherein the electronic device is a server, a user device, or an Internet of Things device.

Exemplary claim 91. The method of any of Exemplary claims 85-90, wherein the information relating to the beverage preparation machine comprises at least one of popular beverages that can be dispensed by beverage preparation machine or a history of beverages dispensed by beverage preparation machine.

Exemplary claim 92. The method of any of Exemplary claims 85-91, wherein the information relating to the beverage preparation machine comprises temperature information local to the beverage preparation machine or sports information local to the beverage preparation machine.

Exemplary claim 93. The method of any of Exemplary claims 85-92, wherein the wireless communication received from the communication interface comprises at least one of stock information or breaking news information.

Exemplary claim 94. The method of any of Exemplary claims 85-93, wherein the communication interface is configured to send, to a mobile device of the user, the information relating to the beverage preparation machine or the user of the beverage preparation machine.

Exemplary claim 95. A beverage preparation machine comprising: a container compartment for receiving a beverage packet comprising beverage ingredients; an outlet for dispensing a beverage flavored by the beverage packet; a communication interface configured to receive a wireless communication from an Internet of Things device; and a processor configured to cause the beverage preparation machine to perform an activity based on an indication within the wireless communication received from the Internet of Things device.

Exemplary claim 96. The beverage preparation machine of Exemplary claim 95 wherein the processor is configured to cause the beverage preparation machine to perform an activity based on the indication within the wireless communication received from the Internet of Things device and a predefined time.

Exemplary claim 97. The beverage preparation machine of Exemplary claim 95 wherein the indication indicates that the Internet of Things device is activated, the processor being configured to: cause the beverage preparation machine to power up based on the indication indicating that the Internet of Things device is activated; and cause the beverage preparation machine to power down based on the indication indicating that that the Internet of Things device is deactivated.

Exemplary claim 98. The beverage preparation machine of any of Exemplary claims 95-97, wherein the Internet of Things device is a smart lighting device.

Exemplary claim 99. The beverage preparation machine of Exemplary claim 95, wherein the activity performed by the beverage preparation machine is a dispensing of a beverage based on the indication indicating that the Internet of Things device is activated.

Exemplary claim 100. The beverage preparation machine of any of Exemplary claims 95-99, wherein the Internet of Things device is a sensor.

Exemplary claim 101. The beverage preparation machine of Exemplary claim 95, wherein the activity performed by the beverage preparation machine is a dispensing of a beverage based on both the indication indicating that the Internet of Things device is activated and a habit of the user.

Exemplary claim 102. The beverage preparation machine of Exemplary claim 101 wherein the habit of the user is requesting a beverage from the beverage preparation machine after a predefined time at which the Internet of Things device is activated.

Exemplary claim 103. The beverage preparation machine of any of Exemplary claims 95-102 comprising a user interface, wherein the user interface is configured to display that the activity has been performed.

Exemplary claim 104. The beverage preparation machine of any of Exemplary claims 95-103 wherein the communication interface is configured to transmit a wireless communication to a mobile device of the user indicating that the beverage preparation machine performed the activity.

Exemplary claim 105. The beverage preparation machine of any of Exemplary claims 95-104 wherein the processor is configured to determine the activity based on the indication within the wireless communication received from the Internet of Things device and machine learning algorithms.

Exemplary claim 106. The beverage preparation machine of any of Exemplary claims 95-105 wherein the processor is configured to cause the beverage preparation machine to perform the activity based on an energy savings schedule.

Exemplary claim 107. The beverage preparation machine of any of Exemplary claims 95-106 wherein the processor is configured to cause the beverage preparation machine to perform the activity based on a beverage consumption history of the user.

Exemplary claim 108. A beverage preparation system comprising: a container compartment for receiving a beverage packet comprising beverage ingredients; an outlet for dispensing a beverage flavored by the beverage packet; a communication interface configured to receive a wireless communication from an Internet of Things device; and a processor configured to cause a beverage preparation machine to perform an activity based on an indication within the wireless communication received from the Internet of Things device.

Exemplary claim 109. The beverage preparation system of Exemplary claim 108 wherein the processor is configured to cause the beverage preparation machine to perform an activity based on the indication within the wireless communication received from the Internet of Things device and a predefined time.

Exemplary claim 110. The beverage preparation system of Exemplary claim 108 wherein the indication indicates that the Internet of Things device is activated, the processor being configured to: cause the beverage preparation machine to power up based on the indication indicating that the Internet of Things device is activated; and cause the beverage preparation machine to power down based on the indication indicating that that the Internet of Things device is deactivated.

Exemplary claim 111. The beverage preparation system of any of Exemplary claims 108-110, wherein the Internet of Things device is a smart lighting device.

Exemplary claim 112. The beverage preparation system of Exemplary claim 108, wherein the activity performed by the beverage preparation machine is a dispensing of a beverage based on the indication indicating that the Internet of Things device is activated.

Exemplary claim 113. The beverage preparation system of Exemplary claim 108, wherein the activity performed by the beverage preparation machine is a dispensing of a beverage based on both the indication indicating that the Internet of Things device is activated and a habit of the user.

Exemplary claim 114. The beverage preparation system of Exemplary claim 113 wherein the habit of the user is requesting a beverage from the beverage preparation machine after a predefined time at which the Internet of Things device is activated.

Exemplary claim 115. The beverage preparation system of any of Exemplary claims 108-114 comprising a user interface, wherein the user interface is configured to display that the activity has been performed.

Exemplary claim 116. The beverage preparation system of any of Exemplary claims 108-115 wherein the communication interface is configured to transmit a wireless communication to a mobile device of the user indicating that the beverage preparation machine performed the activity.

Exemplary claim 117. The beverage preparation system of any of Exemplary claims 108-116 wherein the processor is configured to determine the activity based on the indication within the wireless communication received from the Internet of Things device and machine learning algorithms.

Exemplary claim 118. The beverage preparation system of any of Exemplary claims 108-117 wherein the processor is configured to cause the beverage preparation machine to perform the activity based on an energy savings schedule.

Exemplary claim 119. The beverage preparation system of any of Exemplary claims 108-118 wherein the processor is configured to cause the beverage preparation machine to perform the activity based on a beverage consumption history of the user.

Exemplary claim 120. A method for causing a beverage preparation machine to perform an activity comprising: receiving a beverage packet comprising beverage ingredients, wherein a beverage is flavored by the beverage packet; receiving a wireless communication from an Internet of Things device; and causing the beverage preparation machine to perform the activity based on an indication within the wireless communication received from the Internet of Things device.

Exemplary claim 121. The method of Exemplary claim 120 comprising causing the beverage preparation machine to perform an activity based on the indication within the wireless communication received from the Internet of Things device and a predefined time.

Exemplary claim 122. The method of Exemplary claim 120 wherein the indication indicates that the Internet of Things device is activated, the method comprising: causing the beverage preparation machine to power up based on the indication indicating that the Internet of Things device is activated; and causing the beverage preparation machine to power down based on the indication indicating that wireless communication indicating that the Internet of Things device is deactivated.

Exemplary claim 123. The method of any of Exemplary claims 120-122, wherein the Internet of Things device is a smart lighting device.

Exemplary claim 124. The method of Exemplary claim 120, wherein the activity performed by the beverage preparation machine is a dispensing of a beverage based on the indication indicating that the Internet of Things device is activated.

Exemplary claim 125. The method of Exemplary claim 120, wherein the activity performed by the beverage preparation machine is a dispensing of a beverage based on both the indication indicating that the Internet of Things device is activated and a habit of the user.

Exemplary claim 126. The method of Exemplary claim 125 wherein the habit of the user is requesting a beverage from the beverage preparation machine after a predefined time at which the Internet of Things device is activated.

Exemplary claim 127. The method of any of Exemplary claims 120-126, comprising displaying, via a user interface, that the activity has been performed.

Exemplary claim 128. The method of any of Exemplary claims 120-128 comprising transmitting a wireless communication to a mobile device of the user indicating that the beverage preparation machine performed the activity.

Exemplary claim 129. The method of any of Exemplary claims 120-128 comprising determining the activity based on the indication within the wireless communication received from the Internet of Things device and machine learning algorithms.

Exemplary claim 130. The method of any of Exemplary claims 120-129 comprising causing the beverage preparation machine to perform the activity based on an energy savings schedule.

Exemplary claim 131. The method of any of Exemplary claims 120-130 comprising causing the beverage preparation machine to perform the activity based on a beverage consumption history of the user.

Exemplary claim 132. A beverage preparation machine comprising: a container compartment configured to receive one or more beverage packets comprising beverage ingredients; an outlet configured to dispense a beverage flavored by the one or more beverage packets; an interface configured to receive information relating to the one or more beverage packets, wherein the information comprises a type and an amount of the ingredients available to the beverage preparation machine for dispensing the beverage; a processor configured to: identify recipes for beverages producible by the beverage preparation machine using the type and the amount of the ingredients available to the beverage preparation machine; and cause the beverage preparation machine to produce the selected recipe.

Exemplary claim 133. The beverage preparation machine of Exemplary claim 132, wherein the interface is a communication interface configured to receive a wireless signal comprising the information relating to the beverage packets comprising ingredients for preparing a beverage.

Exemplary claim 134. The beverage preparation machine of any of Exemplary claims 132-133, wherein the interface is at least one of a user interface in which a user provides input via a touch and a communication interface configured to receive a wireless signal from an electronic device.

Exemplary claim 135. The beverage preparation machine of any of Exemplary claims 132-134, wherein the interface is a user interface configured to receive a user input comprising the information relating to the beverage packets comprising ingredients for preparing a beverage.

Exemplary claim 136. The beverage preparation machine of any of Exemplary claims 132-135, wherein the processor is configured to sort the identified recipes based on a popularity of the recipes on a user preference of the recipes.

Exemplary claim 137. The beverage preparation machine of any of Exemplary claims 132-136, wherein the processor is configured to determine the rate at which the ingredients are being dispensed by the beverage preparation machine and a timeframe in which the ingredients are to be reordered.

Exemplary claim 138. The beverage preparation machine of any of Exemplary claims 132-137, wherein the processor is configured to identify recipes for beverages producible by the beverage preparation machine using a plurality of different types of beverage packs.

Exemplary claim 139. The beverage preparation machine of any of Exemplary claims 132-138, wherein the processor configured to identify recipes for beverages producible by the beverage preparation machine based on at least one of a weather local to the beverage preparation machine, a time of year, or a time of day.

Exemplary claim 140. A beverage preparation system comprising: a container compartment configured to receive one or more beverage packets comprising beverage ingredients; an outlet configured to dispense a beverage flavored by the one or more beverage packets; an interface configured to receive information relating to the one or more beverage packets, wherein the information comprises a type and an amount of the ingredients available to a beverage preparation machine for dispensing the beverage; a processor configured to: identify recipes for beverages producible by the beverage preparation machine using the type and the amount of the ingredients available to the beverage preparation machine; and cause the beverage preparation machine to produce the selected recipe.

Exemplary claim 141. The beverage preparation system of Exemplary claim 140, wherein the interface is a communication interface configured to receive a wireless signal comprising the information relating to the beverage packets comprising ingredients for preparing a beverage.

Exemplary claim 142. The beverage preparation system of any of Exemplary claims 140-141, wherein the interface is at least one of a user interface in which a user provides input via a touch and a communication interface configured to receive a wireless signal from an electronic device.

Exemplary claim 142. The beverage preparation system of any of Exemplary claims 140-142, wherein the interface is a user interface configured to receive a user input comprising the information relating to the beverage packets comprising ingredients for preparing a beverage.

Exemplary claim 143. The beverage preparation system of any of Exemplary claims 140-143, wherein the processor is configured to sort the identified recipes based on a popularity of the recipes on a user preference of the recipes.

Exemplary claim 144. The beverage preparation system of any of Exemplary claims 140-143, wherein the processor is configured to determine the rate at which the ingredients are being dispensed by the beverage preparation machine and a timeframe in which the ingredients are to be reordered.

Exemplary claim 145. The beverage preparation system of any of Exemplary claims 140-144, wherein the processor is configured to identify recipes for beverages producible by the beverage preparation machine using a plurality of different types of beverage packs.

Exemplary claim 146. The beverage preparation system of any of Exemplary claims 140-145, wherein the processor configured to identify recipes for beverages producible by the beverage preparation machine based on at least one of a weather local to the beverage preparation machine, a time of year, or a time of day.

Exemplary claim 147. A method of a beverage preparation machine producing a recipe comprising: receiving information relating to one or more beverage packets comprising ingredients for preparing a beverage, wherein the information comprises a type and an amount of the ingredients available to the beverage preparation machine for dispensing the beverage; identifying, via a processor, recipes for beverages producible by the beverage preparation machine using the type and the amount of the ingredients available to the beverage preparation machine; and causing the beverage preparation machine to produce a selected one of the identified recipes.

Exemplary claim 148. The method of Exemplary claim 147 wherein the wireless signal comprising the information relating to the one or more beverage packets is received via a communication interface of the beverage preparation machine.

Exemplary claim 149. The method of Exemplary claim 147 wherein the wireless signal comprising the information relating to the one or more beverage packets is received via a user interface in which a user provides input via a touch or a communication interface configured to receive a wireless signal from an electronic device.

Exemplary claim 150. The method of Exemplary claim 147 wherein the wireless signal comprising the information relating to the one or more beverage packets is received via a user interface configured to receive a user input.

Exemplary claim 151. The method of any of Exemplary claims 147-150, comprising sorting the identified recipes based on a popularity of the recipes on a user preference of the recipes.

Exemplary claim 152. The method of any of Exemplary claims 147-151, comprising determining the rate at which the ingredients are being dispensed by the beverage preparation machine and a timeframe in which the ingredients are to be reordered.

Exemplary claim 153. The method of any of Exemplary claims 147-150 comprising identifying recipes for beverages producible by the beverage preparation machine using a plurality of different types of beverage packs.

Exemplary claim 154. The method of any of Exemplary claims 147-150 comprising identifying recipes for beverages producible by the beverage preparation machine based on at least one of a weather local to the beverage preparation machine, a time of year, or a time of day.

Exemplary claim 155. A beverage preparation machine for dispensing a beverage, the machine comprising: a container compartment for receiving one or more beverage packets comprising beverage ingredients; an outlet configured to dispense a beverage flavored by the one or more beverage packets; a communication interface configured to receive information related to one or more users of the beverage preparation machine or one or more products relating to the beverage preparation machine; a processor configured to: identify a user of the beverage preparation machine and associate the information with the user of the beverage preparation machine; and rank the information associated with the user of the beverage preparation machine according to one or more rules; and a user interface configured to provide, via at least one of a display or a speaker, the ranked information associated with the user of the beverage preparation machine.

Exemplary claim 156. The beverage preparation machine of Exemplary claim 155, wherein the information received by the communication interface is based on a preference of the user of the beverage preparation machine.

Exemplary claim 157. The beverage preparation machine of any of Exemplary claims 155-156, wherein the user interface is configured to receive input from a user of the beverage preparation machine, the input comprising feedback information relating to the use of the beverage preparation machine.

Exemplary claim 158. The beverage preparation machine of any of Exemplary claims 155-157 wherein the rules relate to a time of day and a beverage to be dispensed.

Exemplary claim 159. The beverage preparation machine of any of Exemplary claims 155-158, wherein the information relating to one or more of the products relating to beverage preparation machine comprises information relating to a product launch of another beverage preparation machine, operating instructions of the beverage preparation machine, or favorite recipes that can be used with the beverage preparation machine.

Exemplary claim 160. The beverage preparation machine of any of Exemplary claims 155-159, wherein the user interface is configured to: receive an instruction comprising an amount of the information to be provided by the user interface and a type of content to be provided; and provide, to the display or the speaker, the amount of the content and the type of the content based on the received instruction.

Exemplary claim 161. A beverage preparation system for dispensing a beverage, the machine comprising: a container compartment for receiving one or more beverage packets comprising beverage ingredients; an outlet configured to dispense a beverage flavored by the one or more beverage packets; a communication interface configured to receive information related to one or more users of the beverage preparation machine or one or more products relating to the beverage preparation machine; a processor configured to: identify a user of the beverage preparation machine and associate the information with the user of the beverage preparation machine; and rank the information associated with the user of the beverage preparation machine according to one or more rules; and a user interface configured to provide, via at least one of a display or a speaker, the ranked information associated with the user of the beverage preparation machine.

Exemplary claim 162. The beverage preparation system of Exemplary claim 161, wherein the information received by the communication interface is based on a preference of the user of the beverage preparation machine.

Exemplary claim 163. The beverage preparation system of any of Exemplary claims 161-162 wherein the user interface is configured to receive input from a user of the beverage preparation machine, the input comprising feedback information relating to the use of the beverage preparation machine.

Exemplary claim 164. The beverage preparation system of any of Exemplary claims 161-163 wherein the rules relate to a time of day and a beverage to be dispensed.

Exemplary claim 165. The beverage preparation system of any of Exemplary claims 161-164, wherein the information relating to one or more of the products relating to beverage preparation machine comprises information relating to a product launch of another beverage preparation machine, operating instructions of the beverage preparation machine, or favorite recipes that can be used with the beverage preparation machine.

Exemplary claim 166. The beverage preparation system of any of Exemplary claims 161-165, wherein the user interface is configured to: receive an instruction comprising an amount of the information to be provided by the user interface and a type of content to be provided; and provide, to the display or the speaker, the amount of the content and the type of the content based on the received instruction.

Exemplary claim 167. A method of providing information via a beverage preparation machine comprising: dispensing, via an outlet, a beverage flavored by one or more beverage packets; receiving information related to one or more users of the beverage preparation machine or one or more products relating to the beverage preparation machine; identifying, via a processor, a user of the beverage preparation machine and associating the information with the user of the beverage preparation machine; ranking the information associated with the user of the beverage preparation machine according to one or more rules; and providing, via at least one of a display or a speaker, the ranked information associated with the user of the beverage preparation machine.

Exemplary claim 168. The method of Exemplary claim 167, wherein the information received by the communication interface is based on a preference of the user of the beverage preparation machine.

Exemplary claim 169. The method of any of Exemplary claims 167-168, comprising receiving input from a user of the beverage preparation machine, the input comprising feedback information relating to the use of the beverage preparation machine.

Exemplary claim 170. The method of any of Exemplary claims 167-169 wherein the rules relate to a time of day and a beverage to be dispensed.

Exemplary claim 171. The method of any of Exemplary claims 167-170, wherein the information relating to one or more of the products relating to beverage preparation machine comprises information relating to a product launch of another beverage preparation machine, operating instructions of the beverage preparation machine, or favorite recipes that can be used with the beverage preparation machine.

Exemplary claim 172. The method of any of Exemplary claims 167-171 comprising: receiving an instruction comprising an amount of the information to be provided by the user interface and a type of content to be provided; and providing, to the display or the speaker, the amount of the content and the type of the content based on the received instruction.

Exemplary claim 173. A beverage preparation machine for dispensing a beverage, the machine comprising: a processor configured to identify one or more faults occurring by the beverage preparation machine, wherein the one or more faults comprise a need to repair the beverage preparation machine immediately or in the future; and a memory storing the one or more faults; a communication interface configured to: transmit, to an electronic device, a message indicating the occurrence of the one or more faults by the beverage preparation machine; and receive an indication that the message indicating the occurrence of the one or more faults has been received by the electronic device and reviewed by a user of the electronic device; and a user interface configured to provide, via at least one of a display or a speaker, the indication that the message indicating the occurrence of the one or more faults has been received by the electronic device and reviewed by a user of the electronic device.

Exemplary claim 174. The beverage preparation machine of Exemplary claim 173, wherein the memory is configured to store a maintenance history of the beverage preparation machine, the processor being configured to determine a next maintenance based on the stored maintenance history.

Exemplary claim 175. The beverage preparation machine of Exemplary claim 174, wherein the one or more faults and the next maintenance are identified by a unique code.

Exemplary claim 176. The beverage preparation machine of any of Exemplary claims 173-175, wherein: the processor is configured to determine, based on aspects of the one or more faults, solutions for repairing the one or more faults; and wherein the user interface is configured to provide, via at least one of the display or the speaker, the solutions for repairing the one or more faults.

Exemplary claim 177. The beverage preparation machine of any of Exemplary claims 173-176, wherein the processor is configured to: determine, based on the aspects of the one or more faults, whether the one or more faults are repairable by a technician or a user of the beverage preparation machine; and wherein the user interface is configured to provide, via at least one of the display or the speaker, the solutions for repairing the one or more faults to the technician or the user based on determination of the processor.

Exemplary claim 178. The beverage preparation machine of any of Exemplary claims 173-177, wherein the communication interface sends the one or more faults occurring by the beverage preparation machine to a server for storage.

Exemplary claim 179. The beverage preparation machine of any of Exemplary claims 173-178, wherein the communication interface receives a proposed correction to the one or more faults occurring by the beverage preparation machine.

Exemplary claim 180. The beverage preparation machine of any of Exemplary claims 179, wherein the processor is configured to automatically perform steps to correct the one or more faults occurring by the beverage preparation machine based on the received proposed correction to the one or more faults.

Exemplary claim 181. The beverage preparation machine of any of Exemplary claims 179-180, wherein the user interface provides, via the display or the speaker, steps to correct the one or more faults occurring by the beverage preparation machine based on the received proposed correction to the one or more faults.

Exemplary claim 182. The beverage preparation machine of any of Exemplary claims 179-180, wherein the communication interface provides, to the electronic device, steps to correct the one or more faults occurring by the beverage preparation machine based on the received proposed correction to the one or more faults, the electronic device being a mobile device of a user.

Exemplary claim 183. A beverage preparation system for dispensing a beverage, the machine comprising: a processor configured to identify one or more faults occurring by a beverage preparation machine, wherein the one or more faults comprise a need to repair the beverage preparation machine immediately or in the future; and a memory storing the one or more faults; a communication interface configured to: transmit, to an electronic device, a message indicating the occurrence of the one or more faults by the beverage preparation machine; and receive an indication that the message indicating the occurrence of the one or more faults has been received by the electronic device and reviewed by a user of the electronic device; and a user interface configured to provide, via at least one of a display or a speaker, the indication that the message indicating the occurrence of the one or more faults has been received by the electronic device and reviewed by a user of the electronic device.

Exemplary claim 184. The beverage preparation system of Exemplary claim 183, wherein the memory is configured to store a maintenance history of the beverage preparation machine, the processor being configured to determine a next maintenance based on the stored maintenance history.

Exemplary claim 185. The beverage preparation system of Exemplary claim 184, wherein the one or more faults and the next maintenance are identified by a unique code.

Exemplary claim 186. The beverage preparation system of any of Exemplary claims 183-185, wherein: the processor is configured to determine, based on aspects of the one or more faults, solutions for repairing the one or more faults; and wherein the user interface is configured to provide, via at least one of the display or the speaker, the solutions for repairing the one or more faults.

Exemplary claim 187. The beverage preparation system of any of Exemplary claims 183-186, wherein the processor is configured to: determine, based on the aspects of the one or more faults, whether the one or more faults are repairable by a technician or a user of the beverage preparation machine; and wherein the user interface is configured to provide, via at least one of the display or the speaker, the solutions for repairing the one or more faults to the technician or the user based on determination of the processor.

Exemplary claim 188. The beverage preparation system of any of Exemplary claims 183-187, wherein the communication interface sends the one or more faults occurring by the beverage preparation machine to a server for storage.

Exemplary claim 189. The beverage preparation system of any of Exemplary claims 183-188, wherein the communication interface receives a proposed correction to the one or more faults occurring by the beverage preparation machine.

Exemplary claim 190. The beverage preparation system of any of Exemplary claims 189, wherein the processor is configured to automatically perform steps to correct the one or more faults occurring by the beverage preparation machine based on the received proposed correction to the one or more faults.

Exemplary claim 191. The beverage preparation system of any of Exemplary claims 189-190, wherein the user interface provides, via the display or the speaker, steps to correct the one or more faults occurring by the beverage preparation machine based on the received proposed correction to the one or more faults.

Exemplary claim 192. The beverage preparation system of any of Exemplary claims 189-191, wherein the communication interface provides, to the electronic device, steps to correct the one or more faults occurring by the beverage preparation machine based on the received proposed correction to the one or more faults, the electronic device being a mobile device of a user.

Exemplary claim 193. A method of handling faults of a beverage preparation machine comprising: dispensing, via an outlet, a beverage flavored by one or more beverage packets; identifying, via a processor, one or more faults, wherein the one or more faults comprise a need to repair the beverage preparation machine immediately or in the future; and storing the one or more faults occurring by the beverage preparation machine; sending, to an electronic device, a message indicating the occurrence of the one or more faults by the beverage preparation machine; receiving an indication that the message indicating the occurrence of the one or more faults has been received by the electronic device and reviewed by a user of the electronic device; and providing, via at least one of a display or a speaker, the indication that the message indicating the occurrence of the one or more faults has been received by the electronic device and reviewed by a user of the electronic device.

Exemplary claim 194. The method of Exemplary claim 193 comprising storing a maintenance history of the beverage preparation machine and determining a next maintenance based on the stored maintenance history.

Exemplary claim 195. The method of any of Exemplary claims 193-194, wherein the one or more faults and the next maintenance are identified by a unique code.

Exemplary claim 196. The method of any of Exemplary claims 193-195 comprising: determining, based on aspects of the one or more faults, solutions for repairing the one or more faults; and providing, via at least one of the display or the speaker, the solutions for repairing the one or more faults.

Exemplary claim 197. The method of any of Exemplary claims 193-196 comprising: determining, based on the aspects of the one or more faults, whether the one or more faults are repairable by a technician or a user of the beverage preparation machine; and providing, via at least one of the display or the speaker, the solutions for repairing the one or more faults to the technician or the user based on determination of the processor.

Exemplary claim 198. The method of any of Exemplary claims 193-198 comprising sending the one or more faults occurring by the beverage preparation machine to a server for storage.

Exemplary claim 199. The method of any of Exemplary claims 193-198 comprising receiving a proposed correction to the one or more faults occurring by the beverage preparation machine.

Exemplary claim 200. The method of Exemplary claim 199 comprising automatically performing steps to correct the one or more faults occurring by the beverage preparation machine based on the received proposed correction to the one or more faults.

Exemplary claim 201. The method of Exemplary claim 199 comprising providing, via the display or the speaker, steps to correct the one or more faults occurring by the beverage preparation machine based on the received proposed correction to the one or more faults.

Exemplary claim 202. The method of Exemplary claim 199 comprising providing, to the electronic device, steps to correct the one or more faults occurring by the beverage preparation machine based on the received proposed correction to the one or more faults, the electronic device being a mobile device of a user.

## Claims

1. A beverage preparation machine for dispensing a beverage, the machine comprising:
a processor configured to:
identify one or more faults occurring by the beverage preparation machine, wherein the one or more faults comprise a need to repair the beverage preparation machine immediately or in the future; and
identify an estimated time to resolve the one or more faults;
a memory configured to store the one or more faults;
a communication interface configured to:
transmit, to an electronic device, a message indicating an occurrence of the one or more faults by the beverage preparation machine; and
receive an indication that the message indicating the occurrence of the one or more faults has been received by the electronic device and reviewed by a user of the electronic device; and
a user interface configured to:
provide, via at least one of a display or a speaker, the indication that the message indicating the occurrence of the one or more faults has been received by the electronic device and reviewed by the user of the electronic device;
provide, via at least one of the display or the speaker, the estimated time to resolve the one or more faults; and
receive, via at least an interactive portion of the display, an indication of a user permission for the beverage preparation machine to automatically correct at least some of the one or more faults, the processor being further configured to automatically perform one or more actions to correct the one or more faults, based at least in part, on the indication of the user permission.

2. The beverage preparation machine of claim 1, wherein the processor is further configured to:
determine if the one or more faults include one or more user-correctable faults, the processor being further configured such that:
the estimated time is identified to resolve the one or more user-correctable faults;
the estimated time to resolve the one or more user-correctable faults is provided via the at least one of the display or the speaker; [
the indication of the user permission for the beverage preparation machine to automatically correct at least some of the one or more user-correctable faults is received at least via the interactive portion of the display; and
the one or more actions are automatically performed to correct the one or more user-correctable faults.

3. The beverage preparation machine of claim 1, wherein the memory is further configured to store a maintenance history of the beverage preparation machine, the processor being further configured to determine a next maintenance based on the stored maintenance history, and wherein the one or more faults and the next maintenance are identified by a unique code.

4. The beverage preparation machine of claim 1, wherein the processor is further configured to determine, based on one or more aspects of the one or more faults, one or more solutions for repairing the one or more faults; and wherein the user interface is further configured to provide, via at least one of the display or the speaker, the one or more solutions for repairing the one or more faults.

5. The beverage preparation machine of claim 4, wherein the processor is further configured to determine, based on the one or more aspects of the one or more faults, whether the one or more faults are repairable by a technician or a user of the beverage preparation machine, wherein the user interface is further configured to provide, via at least one of the display or the speaker, the one or more solutions for repairing the one or more faults to the technician or the user based on the determination of the processor.

6. The beverage preparation machine of claim 1, wherein the communication interface is further configured to send the one or more faults occurring by the beverage preparation machine to a server for storage.

7. The beverage preparation machine of claim 1, wherein the communication interface is configured to receive at least one proposed correction to the one or more faults occurring by the beverage preparation machine.

8. The beverage preparation machine of claim 7, wherein the processor is further configured to automatically perform one or more actions to correct the one or more faults occurring by the beverage preparation machine based, at least in part, on the at least one received proposed correction to the one or more faults.

9. The beverage preparation machine of claim 7, wherein the user interface is further configured to provide, via the display or the speaker, one or more actions to correct the one or more faults occurring by the beverage preparation machine based on the at least one received proposed correction to the one or more faults.

10. The beverage preparation machine of claim 7, wherein the communication interface is further configured to provide, to the electronic device, one or more actions to correct the one or more faults occurring by the beverage preparation machine based on the at least one received proposed correction to the one or more faults, the electronic device being a mobile device of a user.

11. A method of handling one or more faults of a beverage preparation machine, the method comprising:
dispensing, via an outlet, a beverage flavored by one or more beverage packets;
identifying an estimated time to resolve the one or more faults;
identifying, via a processor, one or more faults, wherein the one or more faults comprise a need to repair the beverage preparation machine immediately or in the future;
storing the one or more faults occurring by the beverage preparation machine;
sending, to an electronic device, a message indicating the occurrence of the one or more faults by the beverage preparation machine;
receiving an indication that the message indicating the occurrence of the one or more faults has been received by the electronic device and reviewed by a user of the electronic device; and
providing, via at least one of a display or a speaker, the indication that the message indicating the occurrence of the one or more faults has been received by the electronic device and reviewed by a user of the electronic device;
providing, via at least one of the display or the speaker, the estimated time to resolve the one or more faults;
receiving, via at least an interactive portion of the display, an indication of a user permission for the beverage preparation machine to automatically correct at least some of the one or more faults; and
automatically performing, by the beverage preparation machine, one or more actions to correct the one or more faults, based at least in part, on the indication of the user permission.

12. The method of claim 11, further comprising:
determining if the one or more faults include one or more user-correctable faults, wherein:
the estimated time is identified to resolve the one or more user-correctable faults;
the estimated time to resolve the one or more user-correctable faults is provided via the at least one of the display or the speaker;
the indication of the user permission for the beverage preparation machine to automatically correct at least some of the one or more user-correctable faults is received at least via the interactive portion of the display; and
the one or more actions are automatically performed to correct the one or more user-correctable faults.

13. The method of claim 11, further comprising:
storing a maintenance history of the beverage preparation machine; and determining a next maintenance based on the stored maintenance history, wherein the one or more faults and the next maintenance are identified by a unique code.

14. The method of claim 11, further comprising:
determining, based on one or more aspects of the one or more faults, one or more solutions for repairing the one or more faults;
providing, via at least one of the display or the speaker, the one or more solutions for repairing the one or more faults;
determining, based on the one or more aspects of the one or more faults, whether the one or more faults are repairable by a technician or a user of the beverage preparation machine; and
providing, via at least one of the display or the speaker, the one or more solutions for repairing the one or more faults to the technician or the user based on the determination of the processor.

15. The method of claim 11, further comprising sending the one or more faults occurring by the beverage preparation machine to a server for storage;
receiving at least one proposed correction to the one or more faults occurring by the beverage preparation machine;
automatically performing one or more actions to correct the one or more faults occurring by the beverage preparation machine based, at least in part, on the at least one received proposed correction to the one or more faults;
providing, via the display or the speaker, one or more actions to correct the one or more faults occurring by the beverage preparation machine based on the at least one received proposed correction to the one or more faults; and
providing, to the electronic device, one or more actions to correct the one or more faults occurring by the beverage preparation machine based on the at least one received proposed correction to the one or more faults, the electronic device being a mobile device of a user.
